(19)

**Europäisches Patentamt**
**European Patent Office**
**Office européen des brevets**

(11) **EP 4 047 212 B1**

(12) **EUROPÄISCHE PATENTSCHRIFT**

(45) Veröffentlichungstag und Bekanntmachung des Hinweises auf die Patenterteilung:
**02.04.2025  Patentblatt 2025/14**

(21) Anmeldenummer: **22155471.0**

(22) Anmeldetag: **07.02.2022**

(51) Internationale Patentklassifikation (IPC):
**F04D 17/04** *(2006.01)*   **F04D 25/06** *(2006.01)*
**F04D 29/058** *(2006.01)*   **F24F 1/0025** *(2019.01)*
**H02K 7/09** *(2006.01)*   **H02K 7/14** *(2006.01)*
**H02K 21/22** *(2006.01)*   **F04D 29/26** *(2006.01)*
**F04D 29/40** *(2006.01)*   **H01S 3/036** *(2006.01)*
**H01S 3/225** *(2006.01)*

(52) Gemeinsame Patentklassifikation (CPC):
**F04D 17/04; F04D 25/0613; F04D 29/058;**
**F24F 1/0025; H02K 7/09; H02K 7/14; H02K 21/22;**
F04D 25/068; F04D 29/26; F04D 29/403;
H01S 3/036; H01S 3/225

(54) **QUERSTROMLÜFTER**

CROSS-FLOW FAN

VENTILATEUR À FLUX TRANSVERSAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2021  EP 21157946**

(43) Veröffentlichungstag der Anmeldung:
**24.08.2022  Patentblatt 2022/34**

(73) Patentinhaber: **Levitronix GmbH**
**8048 Zürich (CH)**

(72) Erfinder:
• **Steinert, Daniel Dr.**
**8180 Bülach (CH)**
• **Holenstein, Thomas Dr.**
**5222 Umiken (CH)**
• **Bagaric, Ivana**
**8048 Zürich (CH)**

(74) Vertreter: **IPS Irsch AG**
**Langfeldstrasse 88**
**8500 Frauenfeld (CH)**

(56) Entgegenhaltungen:
**EP-A1- 3 595 137      EP-A1- 3 754 204**
**CN-A- 1 299 035      DE-B4- 10 007 428**
**JP-A- 2000 216 460   JP-A- 2001 274 486**
**JP-A- 2003 193 994   JP-A- H08 338 388**
**JP-A- S5 993 994     JP-U- S5 594 482**
**US-A- 4 295 803      US-B1- 6 597 719**

• **BAGARIC IVANA ET AL: "Design and Characterization of a Bearingless Cross-Flow Fan", 2021 IEEE/ASME INTERNATIONAL CONFERENCE ON ADVANCED INTELLIGENT MECHATRONICS (AIM), IEEE, 12 July 2021 (2021-07-12), pages 1195 - 1200, XP033963485, DOI: 10.1109/AIM46487.2021.9517520**

**Beschreibung**

Die Erfindung betrifft einen Querstromlüfter zum Erzeugen eines Fluidstroms gemäss dem Oberbegriff des unabhängigen Patentanspruchs.

Querstromlüfter (cross-flow fan), die auch als Tangentiallüfter bezeichnet werden, haben ein zylindrischen Laufrad, das sich in einer axialen Richtung von einem ersten Ende bis zu einem zweiten Ende erstreckt. Das Laufrad, das oft auch als Walze bezeichnet wird, hat eine Mehrzahl von Schaufeln, die entlang des Umfangs angeordnet sind, und sich jeweils vom ersten bis zum zweiten Ende erstrecken. Das angesaugte Fluid, in der Regel ein Gas, beispielsweise Luft, wird über die gesamte Länge des Laufrades angesaugt, strömt in das rotierende Laufrad und wird dann über die gesamte Länge des Laufrads gleichmässig ausgeblasen. Querstromlüfter haben den Vorteil, dass das angesaugte Fluid durch das lange Flügelrad über eine breite Fläche gleichmässig verteilt werden kann. Querstromlüfter sind kompakt und somit platzsparend, sie sind robust, langlebig und leise.

Der Anwendungsbereich von Querstromlüftern ist sehr gross. Er reicht von sehr einfachen Anwendungen, wie beispielsweise in Klimaanlagen, bis zu äusserst anspruchsvollen Anwendungen, wie beispielsweise die Gaszirkulation in Excimerlasern. Solche Gasentladungslaser werden beispielsweise in Lithographie Vorrichtungen eingesetzt, die in der Halbleiterindustrie zur Herstellung kleinster integrierter Schaltkreise oder für die Produktion von Mikrochips verwendet werden. Excimerlaser werden aber auch in vollkommen anderen Gebieten, beispielsweise in der Augenheilkunde eingesetzt. Excimerlaser benötigen einen internen Lüfter, welcher das Lasergas zirkuliert. Dabei ist es sehr wichtig, dass das aktivierte Gas, welches für die Erzeugung des Laserimpulses benötigt wird, zwischen den Entladungselektroden ständig erneuert wird, um eine ausreichende Laserleistung zu gewährleisten. Hierfür werden sehr hohe Flussraten des Gases benötigt, weshalb es heute üblich ist, in Excimerlasern für die Gaszirkulation Querstromlüfter zu verwenden, die mit extrem hohen Drehzahlen betrieben werden. Eine weitere Herausforderung ist es dabei, dass das Gas in einem Excimerlaser üblicherweise sehr aggressiv ist und eine chemisch äusserst herausfordernde Umgebung darstellt. Ferner ist es wichtig, dass Verunreinigungen des Gases so weit wie möglich vermieden werden.

Solche hohen Anforderungen bezüglich chemisch aggressiver Fluide oder die hohen Anforderungen an die Reinheit des geförderten Fluids existieren aber nicht nur in Excimerlasern, sondern auch in anderen Anwendungen in der Halbleiterindustrie, in der pharmazeutischen Industrie oder in der Biotechnologie.

Daher ist es für Querstromlüfter bekannt, möglichst auf mechanische Lager für das Laufrad zu verzichten, und das Laufrad berührungslos mit magnetischen bzw. elektromagnetische Kräften anzutreiben und zu lagern. Durch diese berührungslose Lagerung ist es einerseits möglich, das zu fördernde Fluid gegen Verunreinigungen zu schützen, die beispielsweise bei mechanischen Lagern durch Abrieb entstehen. Andererseits ist es auch möglich, gewisse Komponenten der Lager- und Antriebsvorrichtungen vollständig gegen eine Kontaktierung durch das zu fördernde Fluid zu schützen.

Bei diesen Querstromlüftern sind in der Regel mindestens zwei Magnetlager vorgesehen, zwischen denen das Laufrad angeordnet ist. Das Laufrad hat dann beispielsweise eine zentral angeordnete, sich in axialer Richtung erstreckend Welle, wobei jedes Ende der Welle in einem Magnetlager gelagert ist. Bei den Magnetlagern unterscheidet man prinzipiell zwischen einer passiven und einer aktiven magnetischen Lagerung. Eine passive magnetische Lagerung oder Stabilisierung ist nicht ansteuerbar oder regelbar. Sie beruht üblicherweise auf Reluktanzkräften. Passive magnetische Lagerungen oder Stabilisierungen arbeiten somit ohne Energiezufuhr von aussen. Eine aktive magnetische Lagerung ist eine Lagerung, die ansteuerbar ist. Bei einer aktiven magnetischen Lagerung kann die Position des zu lagernden Körpers aktiv, beispielsweise durch die Einprägung elektromagnetischer Felder beeinflusst bzw. geregelt werden.

Eine besonders kompakte Ausgestaltung für den Antrieb und die Lagerung des Laufrads in einem Querstromlüfter wird dadurch ermöglicht, dass der elektromagnetische Drehantrieb des Querstromlüfters nach dem Prinzip des lagerlosen Motors ausgestaltet ist. Der lagerlose Motor ist dem Fachmann mittlerweile hinlänglich bekannt, sodass eine detaillierte Beschreibung seiner Funktion nicht mehr notwendig ist. Der Stator des lagerlosen Motors ist als Lager- und Antriebsstator ausgestaltet, mit welchem der Rotor im Betriebszustand berührungslos magnetisch um die axiale Richtung antreibbar - also in Rotation versetzbar- ist und bezüglich des Stators berührungslos magnetisch lagerbar ist. Die axiale Richtung ist dabei durch die Solldrehachse des Rotors festgelegt.

Mit dem Begriff lagerloser Motor ist gemeint, dass der Rotor berührungslos magnetisch gelagert ist, wobei keine separaten Magnetlager vorgesehen sind. Der Stator ist sowohl Stator des elektrischen Antriebs als auch Stator der magnetischen Lagerung. Dabei umfasst der Stator Wicklungen, mit denen sich ein magnetisches Drehfeld erzeugen lässt, welches zum einen ein Drehmoment auf den Rotor ausübt, das dessen Rotation bewirkt, und welches zum anderen eine beliebig einstellbare Querkraft auf den Rotor ausübt, sodass dessen radiale Position -also seine Position in der radialen Ebene senkrecht zur axialen Richtung - aktiv steuerbar bzw. regelbar ist.

Es ist ein wesentlicher Aspekt bei dem Prinzip des lagerlosen Motors, dass im Lager- und Antriebsstator nicht zwischen einer Lagereinheit und einer Antriebseinheit unterschieden werden kann. Es sind beispielsweise elektromagnetische Antriebs- und Lagervorrichtungen bekannt, bei welchen der Stator des Antriebs und der Stator der magnetischen Lagerung zu einer baulichen Einheit zusammengefügt sind. Dabei umfasst der Stator eine oder mehrere Lagereinheiten sowie eine Antriebseinheit, die z. B. zwischen zwei Lagereinheiten angeordnet sein kann. Solche Vorrichtungen zeigen also eine von der Antriebseinheit separierbare Lagereinheit, die ausschliesslich der magnetischen Lagerung dient. Derartige Vorrichtungen sind jedoch nicht als lagerlose Motoren im Sinne der vorliegenden Anmeldung zu verstehen, weil hier tatsächlich separate Lagereinheiten vorhanden sind, welche getrennt von der Antriebsfunktion die Lagerung des Rotors realisieren. Bei einem lagerlosen Motor im Sinne der vorliegenden Anmeldung ist es nicht möglich, den Stator in eine Lagereinheit und in eine Antriebseinheit aufzuteilen. Gerade diese Eigenschaft ist es nämlich, die dem lagerlosen Motor seinen Namen gibt.

Ein Querstromlüfter, bei welchem das Laufrad nach dem Prinzip des lagerlosen Motors angetrieben und gelagert wird, ist aus der US 6,404,794 bekannt. Dort wir ein Excimerlaser vorgeschlagen, der einen Querstromlüfter umfasst. Das Laufrad des Querstromlüfters weist eine Welle auf, die sich in axialer Richtung zentral durch das Laufrad hindurch erstreckt. Zumindest für eines der beiden Enden der Welle ist ein Rotor-Stator-Mechanismus vorgesehen, welcher nach dem Prinzip des lagerlosen Motors ausgestaltet ist. Das andere der beiden Enden wird mittels eines Magnetlagers gelagert, oder alternativ ist auch an diesem anderen Ende ein Rotor-Stator-Mechanismus vorgesehen, der nach dem Prinzip des lagerlosen Motors ausgestaltet ist. Jeder Rotor-Stator-Mechanismus umfasst einen Rotor aus einem magnetischen Material, der fest mit der Welle verbunden ist, sowie einen stationären Stator, der um den jeweiligen Rotor herum angeordnet ist. Der stationäre Stator weist insgesamt vierundzwanzig Spulenkerne auf, von denen sich jeder in radialer Richtung nach innen erstreckt. Um die Spulenkerne herum sind jeweils Spulen zum Erzeugen von elektromagnetischen Feldern angeordnet, wobei jeder Spulenkern jeweils zwei separate Spulen trägt. Ein Teil dieser Spulen bildet ein dreiphasiges und vierpoliges (Polpaarzahl zwei) Wicklungssystem, welches ein vierpoliges Drehfeld erzeugt, das ein Drehmoment auf den Rotor ausübt, um diesen anzutreiben. Der andere Teil der Spulen bildet ein dreiphasiges und zweipoliges (Polpaarzahl eins) Wicklungssystem, mit welchem ein rotierendes zweipoliges Steuerfeld generiert wird. Hierbei sind die Wicklungen als verteilte Wicklungen ausgestaltet, also jeweils als Wicklung, sie sich über mehrere Statorzähne erstreckt. Durch das Zusammenwirken des vierpoligen Drehfelds mit dem zweipoligen Steuerfeld kann der Rotor berührungslos magnetisch im Stator gelagert werden und eine beliebig einstellbare Querkraft in radialer Richtung generiert werden, mit welcher die radiale Position des Rotors regelbar ist. Auf diese Weise ist der Rotor berührungslos zur Rotation antreibbar und berührungslos magnetisch im Stator lagerbar.

JP 2003 193994 A, JP 2001 274486 A, CN 1 299 035 A, JP 2000 216460 A, JP S59 93994 A und US 6 597 719 B1 sind weitere relevante Dokumente des Standes der Technik.

Auch wenn sich die magnetische Lagerung des Rotors in Querstromlüftern bewährt hat, so besteht immer noch Verbesserungsbedarf insbesondere im Hinblick auf eine möglichst kompakte Ausgestaltung des Querstromlüfters bei gleichzeitig sehr hoher Leistungsfähigkeit Ausgehend von diesem Stand der Technik ist es daher eine Aufgabe der Erfindung, einen sehr kompakten und gleichzeitig leistungsfähigen Querstromlüfter vorzuschlagen, der nach dem Prinzip des lagerlosen Motors ausgestaltet ist und somit eine berührungslose magnetische Lagerung und einen berührungslosen Antrieb des Laufrads ermöglicht. Insbesondere soll der Querstromlüfter auch für einen Einsatz in chemisch aggressiven oder herausfordernden Umgebungsbedingungen ausgestaltet werden können, wie sie beispielsweise in der Halbleiterindustrie und speziell in Excimerlasern herrschen. Zudem sollen Verunreinigungen des geförderten Fluids weitestgehend vermieden werden, sodass der Querstromlüfter auch für Anwendungen mit sehr hohen Ansprüchen an die Reinheit des geförderten Fluids einsetzbar ist, beispielsweise in der Pharmaindustrie oder in der Biotechnolgie.

Der diese Aufgabe lösende Gegenstand der Erfindung ist durch die Merkmale des unabhängigen Patentanspruchs gekennzeichnet.

Erfindungsgemäss wird also ein Querstromlüfter zum Erzeugen eines Fluidstroms vorgeschlagen, mit einem zylindrischen Laufrad, das sich in einer axialen Richtung von einem ersten Ende bis zu einem zweiten Ende erstreckt, wobei an dem ersten Ende ein ringförmig ausgestalteter erster magnetisch wirksamer Kern vorgesehen ist, und an dem zweiten Ende ein ringförmig ausgestalteter zweiter magnetisch wirksamer Kern, wobei eine Mehrzahl von Schaufeln vorgesehen ist, von denen jede bezüglich der axialen Richtung zwischen dem ersten magnetisch wirksamen Kern und dem zweiten magnetisch wirksamen Kern angeordnet ist, wobei ein erster Stator vorgesehen ist, der als Lager- und Antriebsstator ausgestaltet ist, und der mit dem ersten magnetisch wirksamen Kern als erster elektromagnetischer Drehantrieb zusammenwirkt, wobei ein zweiter Stator vorgesehen ist, der zumindest als Lagerstator ausgestaltet ist, mit welchem der zweite magnetisch wirksame Kern berührungslos magnetisch bezüglich des zweiten Stators lagerbar ist, wobei das Laufrad (2) mittels des ersten und des zweiten Stators berührungslos magnetisch antreibbar und berührungslos magnetisch bezüglich des ersten Stators und des zweiten Stators lagerbar ist, wobei der erste Stator innerhalb des ersten magnetisch wirksamen Kerns angeordnet ist, sodass der erste magnetisch wirksame Kern den ersten Stator umgibt.

Der Fluidstrom ist ein Gasstrom, beispielsweise ein Luftstrom oder der Strom eines Lasergases in einem Excimerlaser.

Um eine sehr kompakte Ausgestaltung des Querstromlüfters zu ermöglichen, ist der erste elektromagnetische Drehantriebe des Lüfters nach dem Prinzip des lagerlosen Motors ausgestaltet und zudem mit radial innenliegendem Stator. Das heisst, der erste elektromagnetische Drehantrieb ist als Aussenläufer ausgestaltet, sodass der erste magnetisch wirksame Kern radial aussenliegend um den ersten Stator herum angeordnet ist. Dies hat den grossen Vorteil, dass der erste Stator im Inneren des Laufrads angeordnet werden kann, an dessen ersten Ende der erste magnetisch wirksamen Kern vorgesehen ist. Dies ermöglicht eine extrem kompakte Bauweise des Querstromlüfters, weil es nicht mehr nötig ist eine Welle an beiden axialen Enden des Laufrads herauszuführen, die dann angetrieben und gelagert wird.

Zudem bietet der Querstromlüfter alle die Vorteile des lagerlosen Motors wie die vollkommen berührungslose Lagerung, den berührungslosen Antrieb des Laufrads, die Möglichkeit sehr hoher Drehzahlen sowie die Reibungs- und Verschleissfreiheit.

Der zweite Stator, der am zweiten Ende des Laufrads vorgesehen ist, und der mit dem zweiten magnetisch wirksamen Kern zusammenwirkt, um den zweiten magnetisch wirksamen Kern berührungslos magnetisch zu lagern, kann der Stator eines an sich bekannten klassischen Magnetlagers sein. Der zweite magnetisch wirksame Kern bildet dann zusammen mit dem zweiten Stator ein Magnetlager zur berührungslosen Lagerung des Laufrads. Der zweite Stator kann radial innenliegend im Laufrad angeordnet sein, sodass der zweite magnetisch wirksame Kern den zweiten Stator umgibt. Natürlich ist es auch möglich, dass der zweite Stator radial aussenliegend um das Laufrad herum angeordnet sein, sodass der zweite Stator den zweiten magnetisch wirksamen Kern umgibt.

Gemäss einer besonders bevorzugten Ausführungsform ist auch der zweite Stator als Lager- und Antriebsstator ausgestaltet, der mit dem zweiten magnetisch wirksamen Kern als zweiter elektromagnetischer Drehantrieb zusammenwirken kann, um ein Drehmoment auf den zweiten magnetisch wirksamen Kern auszuüben, wobei der zweite Stator vorzugsweise innerhalb des zweiten magnetisch wirksamen Kerns angeordnet ist, sodass der zweite magnetisch wirksame Kern den zweiten Stator umgibt.

Diese Ausführungsform ermöglicht eine ganz besonders kompakte Ausgestaltung des Querstromlüfters. Der erste und der zweite elektromagnetische Drehantrieb sind jeweils als Aussenläufer ausgestaltet, sodass der erste magnetisch wirksame Kern radial aussenliegend um den ersten Stator herum angeordnet ist, und der zweite magnetisch wirksame Kern radial aussenliegend um den zweiten Stator herum. Dies hat den grossen Vorteil, dass beide Statoren im Inneren des Laufrads angeordnet werden können, an dessen beiden Enden jeweils einer der beiden magnetisch wirksamen Kerne vorgesehen ist.Da an beiden Enden des Laufrads jeweils ein Stator vorgesehen ist, der als Lager- und Antriebsstator ausgestaltet sind, können sehr hohe Drehmomente zum Antreiben des Laufrads generiert werden.

Je nach Anwendungsfall ist es aber bei dieser Ausführungsform mit zwei Statoren, die jeweils als Lager- und Antriebsstator ausgestaltet sind, keinesfalls notwendig, sowohl mit dem ersten Stator als auch mit dem zweiten Stator ein Drehmoment zu erzeugen, welches die Rotation des Laufrads antreibt. Es ist beispielsweise auch möglich, nur mit dem ersten Stator ein auf den ersten magnetisch wirksamen Kern wirkendes Drehmoment zu generieren, und den zweiten Stator so zu betreiben, dass er kein Drehmoment erzeugt, welches die Rotation des Laufrads antreibt.

Der erste und der zweite Stator sind bei dieser Ausführungsform jeweils als Lager- und Antriebsstator ausgestaltet, mit welchem das Laufrad im Betriebszustand berührungslos magnetisch um die axiale Richtung antreibbar -also in Rotation versetzbar- ist, und bezüglich der beiden Statoren berührungslos magnetisch lagerbar ist. Die axiale Richtung ist dabei durch die Solldrehachse des Laufrads festgelegt.

Mit dem Begriff lagerloser Motor ist also im Rahmen dieser Anmeldung gemeint, dass der erste und der zweite magnetisch wirksame Kern des Laufrads jeweils berührungslos magnetisch gelagert sind, sodass das gesamte Laufrad berührungslos magnetisch gelagert ist, wobei keine separaten Magnetlager vorgesehen sind. Der erste und optional auch der zweite Stator sind jeweils sowohl Stator des elektromagnetischen Drehantriebs als auch Stator der magnetischen Lagerung. Dabei umfasst jeder Stator Wicklungen, mit denen sich ein magnetisches Drehfeld erzeugen lässt, welches zum einen ein Drehmoment auf den jeweiligen magnetisch wirksamen Kern des Laufrads ausübt, das dessen Rotation bewirkt, und welches zum anderen eine beliebig einstellbare Querkraft auf den jeweiligen magnetisch wirksamen Kern ausübt, sodass dessen radiale Position -also seine Position in der radialen Ebene senkrecht zur axialen Richtung - aktiv steuerbar bzw. regelbar ist. Somit sind zumindest drei Freiheitsgrade des Laufrads aktiv regelbar. Bezüglich seiner Auslenkung in axialer Richtung kann das Laufrad passiv magnetisch, das heisst nicht ansteuerbar, durch Reluktanzkräfte stabilisiert sein. Bezüglich der verbleibenden zwei Freiheitsgrade, nämlich Verkippungen bezüglich der zur axialen Richtung senkrechten radialen Ebene ist das Laufrad vorzugsweise aktiv magnetisch gelagert bzw. stabilisiert.

Wie bereits erwähnt ist es auch möglich, einen der beiden Statoren derart zu betreiben, dass er kein Drehmoment generiert, welches das Laufrad zur Rotation antreibt, oder nur den ersten Stator als Lagerund Antriebsstator auszugestalten und an dem anderen Ende des Laufrads ein normales Magnetlager vorzusehen, welches keine Antriebsfunktion ausübt. Das heisst, es ist sowohl möglich, das Laufrad nur an einem seiner beiden Enden anzutreiben als auch das Laufrad an seinen beiden Enden anzutreiben. Falls beide Statoren jeweils als Lager- und Antriebsstator ausgestaltet sind, ist es auch möglich, das Laufrad wahlweise nur an einem oder an seinen beiden Enden anzutreiben, denn bei dieser Ausgestaltung ist es ist lediglich eine Frage der Ansteuerung der Statoren, ob das Laufrad nur an einem seiner beiden Enden oder an beiden Enden zur Rotation angetrieben wird.

Vorzugsweise ist der erste Stator in einem ersten Statorgehäuse aus einem niederpermeablen Material eingekapselt, und der zweite Stator ist in einem zweiten Statorgehäuse aus einem niederpermeablen Material eingekapselt. Ferner ist es möglich - und auch bevorzugt - dass der erste und der zweite magnetisch wirksame Kern jeweils in einer Ummantelung angeordnet sind, welche den jeweiligen magnetisch wirksamen Kern vollständig umschliesst. Auch diese Ummantelungen sind vorzugsweise aus einem niederpermeablen Material, welches das gleiche sein kann, aber nicht muss, wie das Material, aus welchem die Statorgehäuse gefertigt sind.

In einer besonders bevorzugten Ausgestaltung sind sowohl der erste magnetisch wirksame Kern, als auch der zweite magnetisch wirksame Kern als auch jeder Stator vollständig und vorzugsweise hermetisch umschlossen. Hierdurch sind die magnetisch wirksamen Kerne des Laufrads sowie die Statoren und insbesondere z. B. die Wicklungen der Statoren oder die Spulenkerne der Statoren zuverlässig geschützt, insbesondere auch in chemisch aggressiven Umgebungen, in denen der Querstromlüfter beispielsweise mit korrosiven Gasen, Dämpfen oder anderen korrosiven oder säurehaltigen Fluiden in Berührung kommen kann, beispielsweise in einem Excimerlaser.

Auch sind die magnetisch wirksamen Kerne des Laufrads und die Statoren zuverlässig gegen aggressive Gase, wie beispielsweise Fluor, Chlor oder Säuredämpfe, geschützt. Durch das vollständige Umschliessen der magnetisch wirksamen Kerne und/oder der Statoren weist der Querstromlüfter selbst in aggressiven Umgebungen eine deutlich höhere Korrosionsbeständigkeit und eine erheblich grössere Lebensdauer auf.

Gemäss dieser bevorzugten Ausgestaltung ist jeder magnetisch wirksame Kern des Laufrads vollständig in der jeweiligen Ummantelung eingeschlossen. Jeder Stator ist in dem jeweiligen Statorgehäuse gekapselt, welches aus einem niederpermeablen Material besteht, also aus einem Material, das nur eine geringe magnetische Permeabilität (magnetische Leitfähigkeit) aufweist. Dieses niederpermeable Material kann beispielsweise ein Kunststoff, ein Metall oder eine Keramik sein. Als niederpermeabel werden im Rahmen dieser Anmeldung - wie allgemein üblich- solche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl, die kleiner als 1.1 ist.

Durch die vollständige Ummantelung des magnetisch wirksamen Kerns des Laufrads sowie der Statoren, müssen im magnetischen Luftspalt zwischen dem jeweiligen magnetisch wirksamen Kern und dem jeweiligen Stator sowohl die Ummantelung des magnetisch wirksamen Kerns als auch eine Wandung des Statorgehäuses angeordnet sein. Dies bedingt bezüglich der radialen Richtung einen grossen Abstand zwischen den magnetisch zusammenwirkenden Teilen des Laufrads und der Statoren, das heisst, der magnetische Luftspalt im magnetischen Kreis von dem magnetisch wirksamen Kern und dem zugehörigen Stator ist jeweils gross. Überraschenderweise ist trotz dieses grossen magnetischen Luftspalts eine zuverlässige und stabile Lagerung des Laufrads bezüglich der Statoren möglich.

Vorzugsweise bestehen die Ummantelungen der magnetisch wirksamen Kerne und die Statorgehäuse aus einem Kunststoff oder aus einer Keramik bzw. einem keramischen Werkstoff oder aus einem Metall oder aus einer korrosionsbeständigen Metalllegierung mit schlechter elektrischer Leitfähigkeit wie beispielsweise eine Titan-Aluminium Legierung, insbesondere Ti6Al-4V / Ti6, oder eine Nickel-Chrom-Molybdän Legierung. Wenn die Ummantelungen und/oder die Statorgehäuse aus einem metallischen Werkstoff gefertigt sind, ist dieser metallische Werkstoff vorzugsweise ein solcher, der eine geringe elektrische Leitfähigkeit aufweist, um dadurch insbesondere Wirbelstromverluste in den Ummantelungen und den Statorgehäusen klein zu halten. Insbesondere ist es auch möglich, dass die Ummantelungen und die Statorgehäuse aus unterschiedlichen Materialien bestehen. So können beispielsweise die Ummantelungen aus einem ersten Kunststoff oder einem ersten keramischen Material oder aus einem ersten metallischen Material bestehen, während die Statorgehäuse aus einem zweiten Kunststoff oder einem zweiten keramischen Material oder einem zweiten metallischen Material bestehen. Dabei können der erste und der zweite Kunststoff derselbe Kunststoff sein, oder der erste und der zweite Kunststoff sind verschiedene Kunststoffe. Auch können das erste und das zweite keramische Material identisch oder verschieden sein, und das erste und das zweite metallische Material können identisch oder verschieden sein. Bei den metallischen Materialien sind insbesondere solche Metalllegierungen bevorzugt, die korrosionsbeständig sind und eine geringe elektrische Leitfähigkeit aufweisen.

Je nach Anwendungsfall ist es ferner bevorzugt, die Schaufeln aus einem besonders resistenten Material zu fertigen, beispielsweise aus einer korrosionsbeständigen Legierung oder aus einem Metall oder aus einem Kunststoff. Dies kann auch das Material sein, welches für die Ummantelung der magnetisch wirksamen Kerne genutzt wird.

Eine besonders bevorzugte Massnahme besteht darin, dass in jedem Statorgehäuse eine Kontrolleinrichtung zur Steuerung oder Regelung des jeweiligen Stators vorgesehen ist. Diese Massnahme, die Kontrolleinrichtung in dem jeweiligen Statorgehäuse anzuordnen, ermöglicht eine besonders kompakte und platzsparende Ausgestaltung, wobei die Kontrolleinrichtung gleichzeitig hervorragend durch das Statorgehäuse geschützt ist. Die Kontrolleinrichtung, welche insbesondere die Leistungselektronik zur Generierung der elektromagnetischen Felder, die Regeleinrichtung für den Antrieb und die Lagerung des Laufrads und gegebenenfalls Sensoren oder Auswerteeinheiten umfassen kann, ist in das Statorgehäuse integriert bzw. eingebaut. Somit braucht dem jeweiligen Statorgehäuse von aussen nur noch Energie zugeführt werden und gegebenenfalls Signale, beispielsweise zum Starten oder zum Stoppen des Querstromlüfters oder zum Festlegen der Drehzahl. Dazu kann eine Versorgungsleitung vorgesehen sein, welche dem jeweiligen Statorgehäuse elektrische Energie zur Verfügung stellt.

Vorzugsweise weist jedes Statorgehäuse einen ersten Gehäuseabschnitt und einen zweiten Gehäuseabschnitt auf, wobei der erste Gehäuseabschnitt innerhalb des Laufrads angeordnet ist und von einem der magnetisch wirksamen Kerne des Laufrads umgeben ist, und wobei der zweite Gehäuseabschnitt einen Aussendurchmesser aufweist, welcher mindestens so gross ist wie ein Aussendurchmesser des magnetisch wirksamen Kerns. Insbesondere sind der erste Gehäuseabschnitt und der zweite Gehäuseabschnitt jeweils zylindrisch ausgestaltet, wobei der erste Gehäuseabschnitt einen kleineren Aussendurchmesser aufweist als der zweite Gehäuseabschnitt. Somit kann der jeweilige Stator im ersten Gehäuseabschnitt angeordnet werden, welcher dann in den zugehörigen magnetisch wirksamen Kern des Lüfters eingeführt wird. Der zweite Gehäuseabschnitt kann dann beispielsweise an dem Lüftergehäuse anliegen, welches einen Anschlag für den zweiten Gehäuseabschnitt bildet, sodass das Statorgehäuse in einer wohldefinierten Position ist.

Ferner ist es bevorzugt, dass jede Kontrolleinrichtung in einem der zweiten Gehäuseabschnitte angeordnet ist. Durch diese Massnahme hat man eine räumliche Trennung zwischen dem im ersten Gehäuseabschnitt angeordneten Stator und der im zweiten Gehäuseabschnitt angeordneten Kontrolleinrichtung. Diese räumliche Trennung ist insbesondere unter thermischen Aspekten sehr vorteilhaft, weil die Kontrolleinrichtung und insbesondere ihre elektronischen Komponenten im Betriebszustand viel weniger der Wärme bzw. der Temperatur ausgesetzt sind, die beispielsweise durch den Betrieb des Drehantriebs generiert wird oder welche durch das Fluid in den ersten Gehäuseabschnitt des Statorgehäuses eingetragen wird. In einem Excimerlaser kann beispielsweise die Temperatur des zu fördernden Gases bis zu 200°C oder sogar noch mehr betragen. Da in der Regel der elektromagnetische Drehantrieb und insbesondere der Stator höheren Temperaturen ausgesetzt werden kann als die Kontrolleinrichtung, ist die räumliche Beabstandung von Stator und Kontrolleinrichtung besonders vorteilhaft.

Besonders bevorzugt ist das Laufrad ohne Welle ausgestaltet. Die bei bekannten Querstromlüftern vorgesehene Welle des Laufrads, die sich üblicherweise zentral in axialer Richtung durch das Laufrad hindurch erstreckt und an beiden Enden des Laufrads über dieses hinausragt, damit die beiden Enden der Welle von Lageroder Antriebsvorrichtungen aufgenommen werden können, ist bei dem erfindungsgemässen Querstromlüfter nicht mehr notwendig, sodass auf eine solche Welle verzichtet werden kann. Dies bedeutet insbesondere unter konstruktiven Aspekten eine deutliche Vereinfachung. Ferner können in einfacher Weise im Inneren des Laufrads ein oder mehrere Strömungsleitelement zur Führung des Fluidstroms angeordnet werden, beispielsweise ein Leitblech.

Gemäss einer bevorzugten Ausgestaltung umfasst jeder Stator eine Mehrzahl von Spulenkernen, von denen sich jeder in radialer Richtung erstreckt, wobei jeder Spulenkern genau eine konzentrierte Wicklung trägt. Die konzentrierte Wicklung dient zur Erzeugung eines elektromagnetischen Drehfelds. Die Spulenkerne werden auch als Statorzähne bezeichnet.

Besonders bevorzugt beträgt für jeden Stator die Anzahl der Spulenkerne genau drei, oder genau vier, oder genau fünf, oder genau sechs.

Eine weitere bevorzugte Massnahme besteht darin, dass jeder magnetisch wirksame Kern des Laufrads eine Mehrzahl von Permanentmagneten umfasst.

Dabei ist es besonders bevorzugt, dass jeder magnetisch wirksame Kern des Laufrads einen ringförmigen Rückschluss umfasst, der zusammenhängend ausgestaltet ist und aus einem weichmagnetischen Material gefertigt ist, wobei jeder Permanentmagnet an der radial innenliegenden Seite des Rückschlusses angeordnet ist. Mit dieser Ausführungsform lässt sich ein sehr gutes Drehmoment und eine sehr gute Steifigkeit der magnetischen Lagerung erzielen.

Insbesondere unter praktischen Aspekten ist es bevorzugt, dass jeder Permanentmagnet als Ringsegment ausgestaltet ist, wobei sich die Permanentmagnete jedes magnetisch wirksamen Kerns zu einem Ring ergänzen.

Vorzugsweise ist jeder Permanentmagnet in radialer Richtung magnetisiert, wobei in Umfangsrichtung benachbart angeordnete Permanentmagnete jeweils entgegengesetzt magnetisiert sind.

Insbesondere sind solche Ausführungsformen bevorzugt, bei denen für jeden magnetisch wirksamen Kern die Anzahl der Permanentmagnete genau vier, oder genau acht, oder genau zehn, oder genau zwölf beträgt.

Um die Kontrolleinrichtung noch besser gegen thermische Einwirkungen zu schützen, kann es vorteilhaft sein, in jedem Statorgehäuse zwischen dem Stator und der Kontrolleinrichtung eine thermische Schutzschicht vorzusehen.

Im Hinblick auf eine Reduzierung der thermischen Belastung kann es vorteilhaft sein, dass jeder Stator kühlbar ausgestaltet ist. Dies kann beispielsweise dadurch realisiert werden, dass man zwischen den Spulenkernen, dort wo auch die Wicklungen angeordnet sind, Kühlleitungen vorsieht, die von einem fluiden Kühlmedium, beispielsweise Wasser, durchströmbar sind.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen (teilweise im Schnitt):

Fig. 1: eine perspektivische Darstellung eines ersten Ausführungsbeispiels eines erfindungsgemässen Querstromlüfters (ohne Lüftergehäuse),

Fig. 2: einen Schnitt in axialer Richtung durch das Ausführungsbeispiel aus Fig. 1, wobei zusätzlich das Lüftergehäuse dargestellt ist entlang der Schnittlinie II-II in Fig. 1,

Fig. 3 eine vergrösserte Darstellung des ersten elektromagnetischen Drehantriebs in einer zu Fig. 2 analogen Darstellung.

Fig. 4: einen Schnitt durch den ersten elektromagnetischen Drehantrieb senkrecht zur axialen Richtung entlang der Schnittlinie IV-IV in Fig. 3, und

Fig. 5: einen Querschnitt des ersten magnetisch wirksamen Kerns, wobei der Schnitt in radialer Richtung erfolgt,

Fig. 6: drei Abbildungen zur Erläuterung des Lager- und Antriebsprinzips,

Fig. 7: eine schematische Schnittdarstellung des ersten bzw. des zweiten elektromagnetischen Drehantriebs in einem Schnitt senkrecht zur axialen Richtung A,

Fig. 8 - 12: wie Fig. 7, jedoch für verschiedene Varianten der Ausgestaltung des ersten bzw. des zweiten elektromagnetischen Drehantriebs,

Fig. 13: eine Variante des ersten Ausführungsbeispiels in einer perspektivischen Darstellung,

Fig. 14: eine Schnittdarstellung der Variante aus Fig. 13 in einem Schnitt durch das Laufrad senkrecht zur axialen Richtung,

Fig. 15: eine schematische Darstellung eines zweiten Ausführungsbeispiels eines erfindungsgemässen Querstromlüfters,

Fig. 16: vier Abbildungen zur Erläuterung des Lager- und Antriebsprinzips des zweiten Ausführungsbeispiels;

Fig. 17: eine schematische Darstellung eines dritten Ausführungsbeispiels eines erfindungsgemässen Querstromlüfters, und

Fig. 18: eine schematische Darstellung eines vierten Ausführungsbeispiels eines erfindungsgemässen Querstromlüfters.

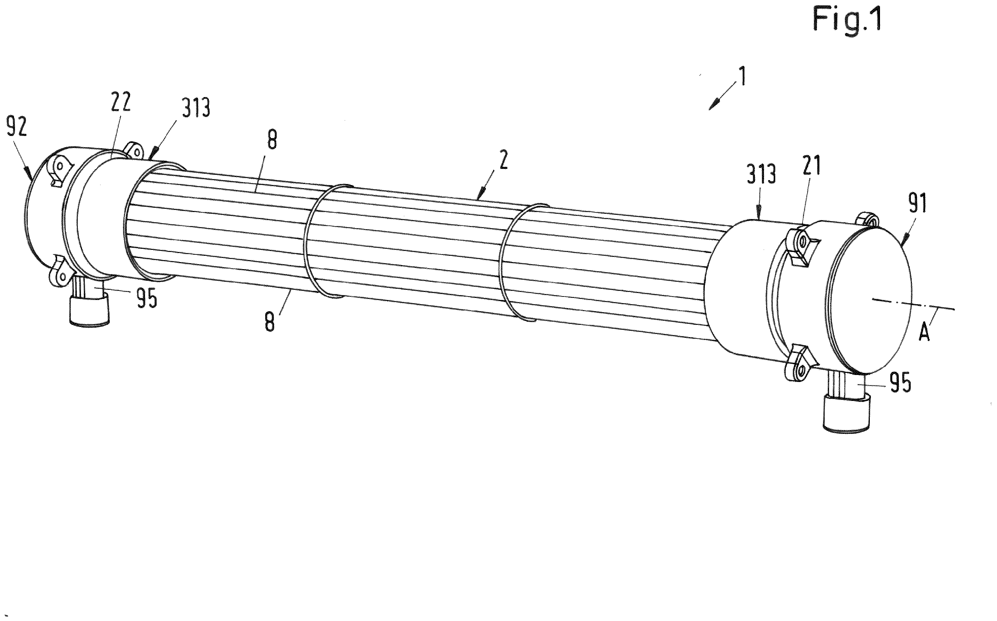

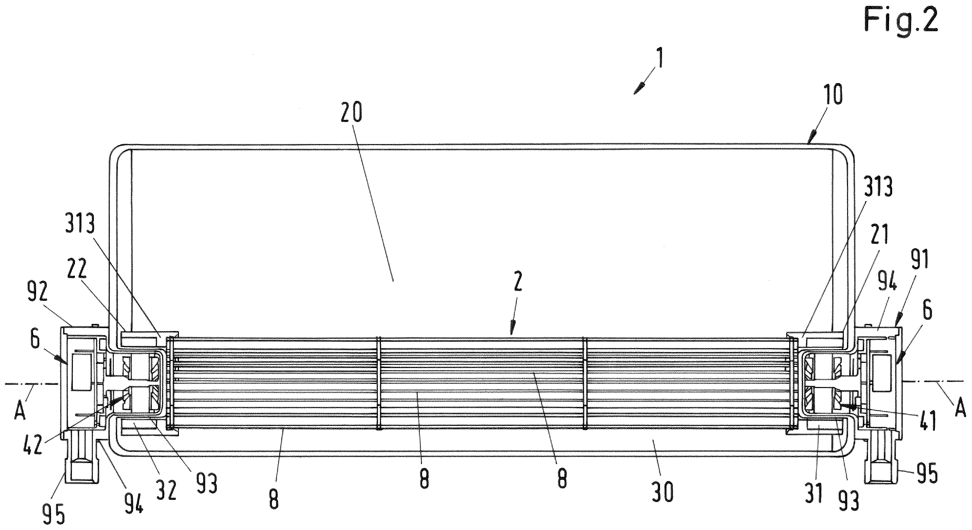

Fig. 1 zeigt in einer perspektivischen Darstellung ein erstes Ausführungsbeispiel eines erfindungsgemässen Querstromlüfters, der gesamthaft mit dem Bezugszeichen 1 bezeichnet ist. Zum besseren Verständnis zeigt Fig. 2 noch eine Schnittdarstellung dieses Ausführungsbeispiels in einem Schnitt entlang einer axialen Richtung A, wobei in Fig. 2 zusätzlich noch ein Lüftergehäuse 10 dargestellt ist, welches in Fig. 1 nicht dargestellt ist.

Der Querstromlüfter 1 umfasst ein zylindrisches Laufrad 2, das manchmal auch als Walze bezeichnet wird. Das Laufrad 2 erstreckt sich in der axialen Richtung A von einem ersten Ende 21 bis zu einem zweiten Ende 22 und ist zum Rotieren um die axiale Richtung A ausgestaltet. Die axiale Richtung A ist durch die Solldrehachse festgelegt, um welche das Laufrad im Betriebszustand rotieren soll. Diese stimmt mit der Zylinderachse des Laufrads 2 überein.

Eine zur axialen Richtung senkrechte Richtung wird als radiale Richtung bezeichnet.

An dem ersten Ende 21 des Laufrads 2 ist ein ringförmig ausgestalteter erster magnetisch wirksamer Kern 31 (Fig. 2) vorgesehen. An dem zweiten Ende des Laufrads 2 ist ein ringförmig ausgestalteter zweiter magnetisch wirksamer Kern 32 vorgesehen. Ferner umfasst das Laufrad 2 eine Mehrzahl von Schaufeln 8, von denen jede bezüglich der axialen Richtung A zwischen den beiden Enden 21, 22 angeordnet ist und sich von einer Ummantelung 313 des ersten magnetisch wirksamen Kerns 31 in axialer Richtung A und parallel zur Solldrehachse bis zu einer Ummantelung 313 des zweiten magnetisch wirksamen Kerns 32 erstreckt. Jede Schaufel 8 ist drehfest sowohl mit dem ersten magnetisch wirksamen Kern 31 als auch mit dem zweiten magnetisch wirksamen Kern 32 verbunden.

Wie dies von konventionellen Querstromlüftern bekannt ist, sind die Schaufeln 8 entlang des Umfangs des Laufrads 2 beabstandet angeordnet, sodass das zu fördernde Gas, auf der Saugseite zwischen den Schaufeln 8 in das Innere des Laufrads 2 angesaugt wird und auf der Druckseite aus dem Inneren des Laufrads 2 zwischen den Schaufeln 8 ausgestossen wird.

Das Laufrad 2 ist in dem Lüftergehäuse 10 (Fig. 2) angeordnet, welches in an sich bekannter Weise ausgestaltet sein kann. Das Lüftergehäuse 10 umfasst typischerweise einen Ansaugbereich 20, durch welchen das zu fördernde Fluid über die gesamte Länge des Laufrads 2 in das Innere des Laufrads 2 angesaugt wird, sowie einen Ausstossbereich 30, durch welchen das zu fördernde Fluid über die gesamte Länge des Laufrads 2 aus dem Inneren des Laufrads 2 ausgestossen wird. Mit der Länge des Laufrads 2 ist dabei seine Erstreckung in der axialen Richtung A gemeint.

Der Querstromlüfter 1 umfasst ferner einen ersten Stator 41, der als Lager- und Antriebsstator ausgestaltet ist, und der mit dem ersten magnetisch wirksamen Kern 31 als erster elektromagnetischer Drehantrieb zusammenwirkt. Dabei ist der erste elektromagnetische Drehantrieb als Aussenläufer ausgestaltet, das heisst der im Betriebszustand nicht rotierende Teil, nämlich der erste Stator 41, ist innenliegend in dem im Betriebszustand rotierenden Teil, nämlich dem ersten magnetisch wirksamen Kern 31 angeordnet, sodass der erste magnetisch wirksame Kern 31 den ersten Stator 41 umgibt.

Der Querstromlüfter 1 umfasst ferner einen zweiten Stator 42, der zumindest als Lagerstator ausgestaltet ist, mit welchem der zweite magnetisch wirksame Kern 32 berührungslos magnetisch bezüglich des zweiten Stators 42 lagerbar ist.

Bei dem hier beschriebenen ersten Ausführungsbeispiel ist auch der zweite Stator 42 als Lager- und Antriebsstator ausgestaltet, und kann mit dem zweiten magnetisch wirksamen Kern 32 als zweiter elektromagnetischer Drehantrieb zusammenwirken. Dabei ist der zweite elektromagnetische Drehantrieb als Aussenläufer ausgestaltet, das heisst der im Betriebszustand nicht rotierende Teil, nämlich der zweite Stator 42, ist innenliegend in dem im Betriebszustand rotierenden Teil, nämlich dem zweiten magnetisch wirksamen Kern 32 angeordnet, sodass der zweite magnetisch wirksame Kern 32 den zweiten Stator 42 umgibt.

Der erste Stator 41 und der zweite Stator 42 sind also jeweils im Inneren des Laufrads 2 angeordnet, derart, dass der erste Stator 41 von dem ersten magnetisch wirksamen Kern 31 umgeben wird, und der zweite Stator 42 von dem zweiten magnetisch wirksamen Kern 32 umgeben wird. Da der erste magnetisch wirksame Kern 31 und der zweite magnetisch wirksame Kern 32 über die Schaufeln 8 drehfest miteinander verbunden sind, rotiert das Laufrad 2 im Betriebszustand um die innenliegend angeordneten Statoren 41, 42.

Sowohl der erste elektromagnetische Drehantrieb als auch der zweite elektromagnetische Drehantrieb sind nach dem Prinzip des lagerlosen Motors ausgestaltet und umfassen den ersten bzw. den zweiten magnetisch wirksamen Kern 31 bzw. 32, welcher berührungslos magnetisch antreibbar ist und spulenfrei ausgestaltet ist, sowie den ersten bzw. zweiten Stator 41 bzw. 42, welcher als Lager- und Antriebsstator ausgestaltet ist, mit welchem der magnetisch wirksame Kern 31 bzw. 32 im Betriebszustand berührungslos magnetisch um die Solldrehachse antreibbar und bezüglich des Stators 41 bzw. 42 berührungslos magnetisch lagerbar ist.

Die Solldrehachse, um welche das Laufrad 2 im Betriebszustand rotieren soll, ist diejenige Drehachse, um welche das Laufrad 2 rotiert, wenn es sich bezüglich der Statoren 41, 42 in einer zentrierten und unverkippten Position befindet. Das Laufrad 2 ist dann bezüglich der radialen Richtung in beiden Statoren 41, 42 zentriert. Die Solldrehachse fällt in der Regel mit den Mittelachsen der beiden Statoren 41 und 42 zusammen Die beiden Statoren 41 und 42 sind derart angeordnet, dass ihre Mittelachsen miteinander fluchten, das heisst auf der gleichen Achse in axialer Richtung A liegen. Für jeden Stator 41, 42 wird mit der radialen Ebene diejenige zur Solldrehachse bzw. zur axialen Richtung A senkrechte Ebene bezeichnet, welche die magnetische Mittelebene des Stators 41, 42 ist. Für jeden Stator 41, 42 definiert die radiale Ebene die x-y-Ebene eines kartesischen Koordinatensystems, dessen z-Achse in axialer Richtung A verläuft. Die radiale Ebene des ersten Stators 41 ist parallel zur radialen Ebene des zweiten Stators 42.

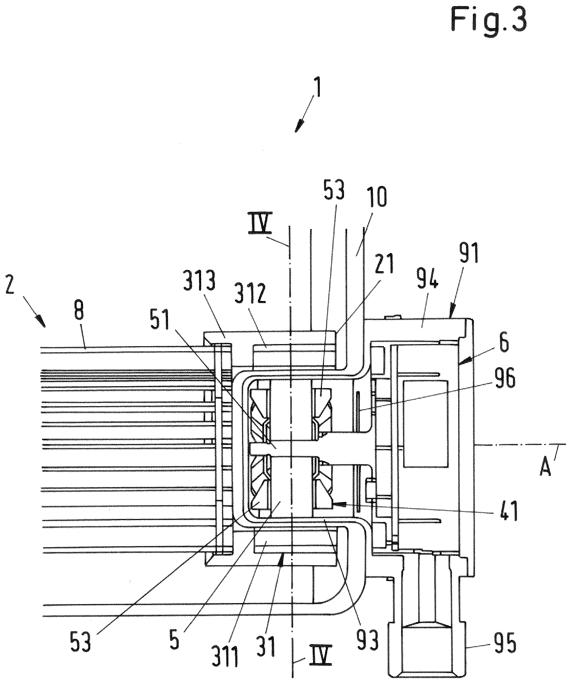

Besonders bevorzugt sind der erste elektromagnetische Drehantrieb, welcher den ersten magnetisch wirksamen Kern 31 und den ersten Stator 41 umfasst, und der zweite elektromagnetische Drehantrieb, welcher den zweiten magnetisch wirksamen Kern 32 und den zweiten Stator 42 umfasst, zumindest im Wesentlichen identisch ausgestaltet. Bei der folgenden Beschreibung der elektromagnetischen Drehantriebe und insbesondere bei der Beschreibung der Fig. 3, Fig. 4 und Fig. 5 wird daher überwiegend nur auf den ersten elektromagnetischen Drehantrieb Bezug genommen, weil dies für das Verständnis ausreichend ist. Es versteht sich, dass diese Erläuterungen beispielhaft anhand des ersten elektromagnetischen Drehantriebs erfolgen und in gleicher Weise oder in sinngemäss gleicher Weise auch für den zweiten elektromagnetischen Drehantrieb gelten.

Es sei jedoch betont, dass die beiden elektromagnetischen Drehantriebe, auch wenn sie zumindest im Wesentlichen identisch ausgestaltet sind, im Betriebszustand des Querstromlüfters 1 nicht in identischer Weise betrieben werden müssen. So ist es beispielsweise möglich, das Drehmoment, welches die Rotation des Laufrads 2 antreibt, nur mit einem der beiden elektromagnetischen Drehantriebe zu generieren, und den anderen der beiden elektromagnetischen Drehantriebe nur zur Erzeugung von Lagerkräften für die berührungslos magnetische Lagerung des Laufrads 2 zu verwenden, sodass also nur an einem der beiden Enden 21, 22 ein Drehmoment generiert wird, welches die Rotation des Laufrads 2 antreibt. Natürlich ist es auch möglich, dass mit beiden elektromagnetischen Drehantrieben jeweils ein Drehmoment generiert wird, welches die Rotation des Laufrads 2 antreibt, dass also an beiden Enden 21, 22 ein Drehmoment auf das Laufrad 2 einwirkt, welches seine Rotation antreibt. Es versteht sich, dass in diesem Falle die an den beiden Enden 21, 22 eingeprägten Drehmomente für den Antrieb des Laufrads 2 betragsmässig gleich gross oder auch verschieden sein können.

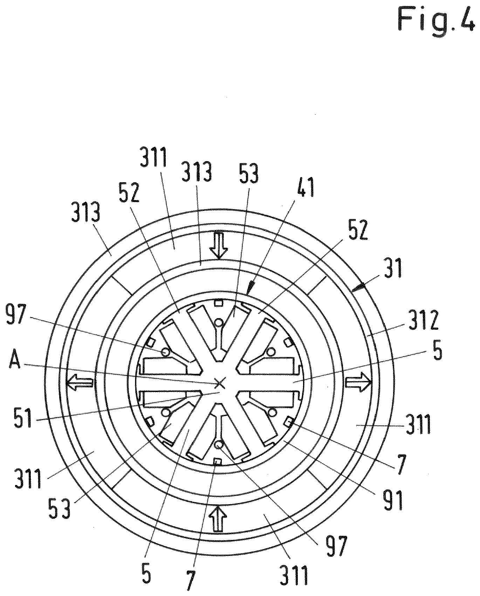

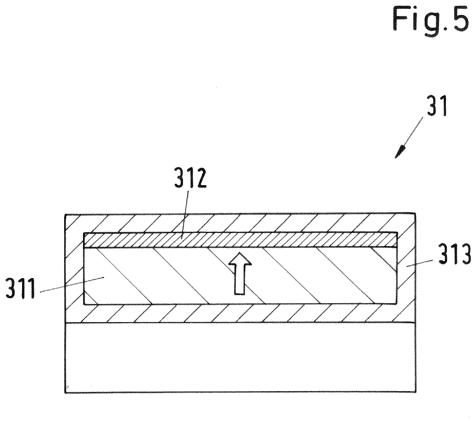

Zum besseren Verständnis zeigt Fig. 3 eine vergrösserte Darstellung des ersten elektromagnetischen Drehantriebs in einer zu Fig. 2 analogen Darstellung. Fig. 4 zeigt einen Schnitt durch den ersten elektromagnetischen Drehantrieb senkrecht zur axialen Richtung A entlang der Schnittlinie IV-IV in Fig. 3. Der Schnitt in Fig. 4 erfolgt senkrecht zur axialen Richtung A in der radialen Ebene des ersten Stators 41, also in der magnetischen Mittelebene des ersten Stators 41. Fig. 5 zeigt einen Querschnitt des ersten magnetisch wirksamen Kerns 31, wobei der Schnitt in radialer Richtung erfolgt.

Das Laufrad 2 des Querstromlüfters 1 umfasst die beiden magnetisch wirksamen Kerne 31 und 32, von denen einer am ersten Ende 21 des Laufrads 2 angeordnet ist und der andere am zweiten Ende 22 des Laufrads 2. Das Laufrad 2 ist spulenfrei ausgestaltet, das heisst am Laufrad 2 und insbesondere an den magnetisch wirksamen Kernen 31, 32 des Laufrads 2 sind keine Wicklungen vorgesehen. Mit dem ersten bzw. zweiten magnetisch wirksamen Kern 31 bzw. 32 des Rotors 2 sind diejenigen Bereiche des Laufrads 2 gemeint, welche für die Drehmomentbildung sowie für die Erzeugung der magnetischen Lagerkräfte magnetisch mit den ersten Stator 41 bzw. mit dem zweiten Stator 42 zusammenwirken. Jeder magnetisch wirksamen Kern 31, 32 ist jeweils ringförmig ausgestaltet und um den ersten Stator 41 bzw. den zweiten Stator 42 herum angeordnet.

In Fig. 3 und Fig. 4 ist der erste elektromagnetische Drehantrieb dargestellt, welcher den ersten magnetisch wirksamen Kern 31 und den ersten Stator 41 umfasst. Ein Querschnitt durch den ersten magnetisch wirksamen Kern 31 in radialer Richtung ist in Fig. 5 gezeigt. Der erste magnetisch wirksame Kern 31 ist in Form einer Ringscheibe, beziehungsweise eines kreiszylindrischen Rings ausgestaltet. Der erste magnetisch wirksame Kern 31 umfasst einen ringförmigen, radial aussenliegend angeordneten Rückschluss 312, sowie mindestens einen Permanentmagneten 311, der beispielsweise als permanentmagnetischer Ring ausgestaltet sein kann. Natürlich ist es auch möglich, dass eine Mehrzahl von Permanentmagneten 311 vorgesehen ist, von denen jeder beispielsweise als ein Ringsegment ausgestaltet ist. Bei dem hier beschriebenen Ausführungsbeispiel - siehe insbesondere Fig. 4 - sind insgesamt vier Permanentmagnete 311 vorgesehen, die sich in ihrer Gesamtheit zu einem Ring ergänzen. In Umfangsrichtung gesehen, sind alle vier Permanentmagnete 311 gleich lang, sodass jeder Permanentmagnet 311 jeweils ein Viertel des gesamten permanentmagnetischen Rings bildet. Jeder Permanentmagnet 311 ist in radialer oder diametraler Richtung magnetisiert, so wie dies die Pfeile ohne Bezugszeichen in den Fig. 4 und Fig. 5 zeigen. Dabei sind in Umfangsrichtung benachbarte Permanentmagnete 311 jeweils in entgegengesetzter Richtung polarisiert, das heisst es grenzen jeweils ein in radialer bzw.

diametraler Richtung nach innen polarisierter Permanentmagnet 311 und ein in radialer bzw. diametraler Richtung nach aussen polarisierter Permanentmagnet 311 aneinander. Der erste magnetisch wirksame Kern 31 ist hier also vierpolig, d.h. mit der Polpaarzahl zwei ausgestaltet.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff verstanden, der eine Koerzitivfeldstärke, genauer gesagt eine Koerzitivfeldstärke der magnetischen Polarisation aufweist, die mehr als 10'000 A/m beträgt. Alle Permanentmagnete 311 der magnetisch wirksamen Kern2 31, 32 des Laufrads 2 bestehen vorzugsweise aus Neodym-Eisen-Bor (NdFeB) oder aus Samarium-Cobalt (SmCo) Legierungen.

Der erste magnetisch wirksame Kern 31 umfasst ferner den ringförmigen Rückschluss 312, welcher radial aussenliegend um alle Permanentmagnete 311 herum angeordnet. Ist. Der Rückschluss 312 umschliesst alle Permanentmagnete 311 und besteht aus einem weichmagnetischen Material, denn er dient der Führung des magnetischen Flusses.

Für jeden magnetisch wirksame Kern 31, 32 des Laufrads 2 ist jeweils die Ummantelung 313 vorgesehen, welche den jeweiligen magnetisch wirksamen Kern 31, 31 vollständig und vorzugsweise hermetisch umschliesst, sodass jeder magnetisch wirksame Kern 31, 32 eingekapselt ist. Die Ummantelung 313 besteht vorzugsweise aus einem Metall oder aus einer korrosionsbeständigen Metalllegierung oder aus einer Keramik bzw. einem keramischen Werkstoff oder aus einem Kunststoff. Falls die Ummantelung 313 aus einem metallischen Werkstoff besteht, so hat dieser vorzugsweise eine geringe elektrischer Leitfähigkeit, um insbesondere Wirbelstromverluste möglichst gering zu halten. Geeignete Legierungen, die insbesondere eine hohe Korrosionsbeständigkeit aufweisen, sind beispielsweise Titan-Aluminium Legierungen, insbesondere Ti6Al-4V / Ti6, oder Nickel-Chrom-Molybdän Legierungen. Ein geeignetes Metall ist beispielsweise Tantal.

Zum Erzeugen der Ummantelung 313 kann beispielsweise beim Herstellungsprozess jeder magnetisch wirksame Kern 31, 32 mit einem Kunststoff oder mit einer Keramik umgossen werden oder mit einem metallischen Werkstoff beschichtet werden. Es ist aber auch möglich, die Ummantelung 313 aus Kunststoff, Keramik oder einem metallischen Werkstoff, insbesondere einem korrosionsbeständigen, nicht oder nur schwach ferromagnetischen und elektrisch schlecht leitenden metallischen Werkstoff zunächst mit einer ringförmigen Ausnehmung zu versehen, in welche der jeweilige magnetisch wirksame Kern 31, 32 eingelegt wird. Anschliessend wird die ringförmige Ausnehmung mit einem entsprechend geformten Deckel aus Kunststoff oder einer Keramik oder einem metallischen Werkstoff verschlossen, welcher dann mit dem Rest der Ummantelung 313 verbunden wird, beispielsweise durch einen Schweissprozess. Anschliessend ist jeder magnetisch wirksame Kern 31, 32 des Laufrads 2 hermetisch eingekapselt.

Jeder Stator 41, 42 umfasst eine Mehrzahl - hier genau sechs - Spulenkerne 5, von denen sich jeder in radialer Richtung erstreckt, und die sternförmig angeordnet sind. Jeder Spulenkern 5 ist stabförmig ausgestaltet und erstreckt sich jeweils von einem im Zentrum des jeweiligen Stators 41, 42 angeordneten zentralen Polstück 51 radial nach aussen und endet in einem gerundet ausgestalteten Polschuh 52, sodass jeder Spulenkern 5 insgesamt ein im Wesentlichen T-förmiges Aussehen hat. Die radial aussenliegenden Begrenzungsflächen aller Polschuhe 52 liegen alle auf einem Kreiszylinder, der koaxial mit der Längsachse des zentralen Polstücks 51 ist.

Um die für den magnetischen Antrieb und die magnetische Lagerung des Laufrads 2 notwendigen elektromagnetischen Drehfelder zu erzeugen, tragen die Spulenkerne 5 Wicklungen. Bei dem hier beschriebenen ersten Ausführungsbeispiel sind die Wicklungen beispielsweise so ausgestaltet, dass um jeden Spulenkern 5 herum jeweils genau eine konzentrierte Wicklung als diskrete Spule 53 gewickelt ist.

Mit diesen Spulen 53 werden im Betriebszustand diejenigen elektromagnetischen Drehfelder erzeugt, mit welchen ein Drehmoment auf das Laufrad 2 bewirkt wird, und mit welchen eine beliebig einstellbare Querkraft in radialer Richtung auf den jeweiligen magnetisch wirksamen Kern 31, 32 ausübbar ist, sodass die radiale Position des Laufrads 2, also seine Position in der zur axialen Richtung A senkrechten radialen Ebene des jeweiligen Stators 41, 42, aktiv steuerbar bzw. regelbar ist.

Sowohl das zentrale Polstück 51 als auch die Spulenkerne 5 jedes Stators 41, 42 als auch der Rückschluss 312 jedes magnetisch wirksamen Kerns 31, 32 sind jeweils aus einem weichmagnetischen Material gefertigt, weil sie als Flussleitelemente zur Führung des magnetischen Flusses dienen. Geeignete weichmagnetische Materialien sind beispielsweise ferromagnetische oder ferrimagnetische Materialien, also insbesondere Eisen, Nickel-Eisen oder Silizium-Eisen. Hierbei ist insbesondere bei jedem Stator 41, 42 eine Ausgestaltung als Statorblechpaket bevorzugt, bei welcher die Spulenkerne 5 und das zentrale Polstück 51 geblecht ausgestaltet sind, das heisst sie bestehen aus mehreren dünnen Elementen, die gestapelt sind. Auch der Rückschluss 312 jedes magnetisch wirksamen Kerns 31, 32 kann geblecht ausgestaltet sein. Alternativ zur geblechten Ausgestaltung können für die magnetisch wirksamen Kerne 31, 32 und/oder für die Statoren 41, 42 auch weichmagnetische Verbundwerkstoffe eingesetzt werden, welche aus elektrisch isolierten und zusammengepressten Metallpartikeln bestehen. Insbesondere können diese weichmagnetischen Verbundwerkstoffe, die auch als SMC (Soft Magnetic Composites) bezeichnet werden, aus Eisenpulverpartikeln bestehen, die mit einer elektrisch isolierenden Schicht beschichtet sind. Diese SMC werden dann mittels pulvermetallurgischer Verfahren zu der gewünschten Ausgestaltung geformt.

Wie bereits erwähnt sind der erste und der zweite elektromagnetische Drehantrieb mit dem ersten bzw. dem zweiten magnetisch wirksamen Kern 31, 32 und dem ersten bzw. zweiten Stator 41, 42 nach dem Prinzip des lagerlosen Motors ausgestaltet, bei welchem der jeweilige magnetisch wirksame Kern 31, 32 berührungslos magnetisch angetrieben und berührungslos magnetisch bezüglich des jeweiligen Stators 41, 42 gelagert wird, wobei keine separaten oder separierbaren Magnetlager vorgesehen sind. Die Lagerfunktion und die Antriebsfunktion werden jeweils mit dem gleichen Stator 41 bzw. 42 realisiert, wobei es nicht möglich ist, den Stator 41 bzw. 42 in eine Lagereinheit und in eine Antriebseinheit aufzuteilen. Die Antriebs- und die Lagerfunktion können nicht voneinander getrennt werden. Für solche Drehantriebe hat sich die Bezeichnung "lagerloser Motor" etabliert, weil eben keine separaten Magnetlager oder magnetische Lagereinheiten für das Laufrad vorgesehen sind. Diese besonders effizienten lagerlosen Motoren zeichnen sich insbesondere durch ihre äusserst kompakte Bauform bei gleichzeitiger Realisierung des "berührungslosen" Konzepts aus.

Ein lagerloser Motor ist also ein elektromagnetischer Drehantrieb, bei welchem der im Betriebszustand rotierende magnetisch wirksame Kern 31, 32 bezüglich des Stators 41, 42 gelagert ist, wobei keine separaten magnetischen Lager oder magnetische Lagereinheiten vorgesehen sind. Der jeweilige Stator 41, 42 ist dazu als Lager- und Antriebsstator ausgestaltet, der sowohl Stator 41, 42 des elektrischen Antriebs als auch Stator 41, 42 der magnetischen Lagerung ist. Mit den Spulen 53 des Lager- und Antriebsstators 41, 42 lassen sich magnetische Drehfelder erzeugen, welche zum einen ein Drehmoment auf den magnetisch wirksamen Kern 31, 32 ausüben, das dessen Rotation bewirkt, und welche zum anderen eine beliebig einstellbare Querkraft auf den magnetisch wirksamen Kern 31, 32 ausüben, sodass dessen radiale Position, also seine Position in der radialen Ebene des jeweiligen Stators 41, 42 aktiv steuerbar bzw. regelbar ist. Das grundlegende Prinzip des lagerlosen Motors ist dem Fachmann mittlerweile hinlänglich bekannt, allerdings wird für den erfindungsgemässen Querstromlüfter 1 eine spezielle Realisierung des Prinzips der lagerlosen Motors bevorzugt, die noch genauer erläutert wird.

Bei dem hier beschriebenen ersten Ausführungsbeispiel sind drei Freiheitsgrade des jeweiligen magnetisch wirksamen Kerns 31, 32 aktiv steuer- bzw. regelbar, nämlich seine Position in der radialen Ebene (zwei Freiheitsgrade) und seine Rotation um die axiale Richtung A. Bezüglich seiner axialen Auslenkung in Richtung der Solldrehachse ist der jeweilige magnetisch wirksame Kern 31, 32 passiv magnetisch, das heisst nicht ansteuerbar, durch Reluktanzkräfte stabilisiert bzw. gelagert. Die radiale Lagerung des Laufrads 2 entspricht daher von der Funktion einer aktiven magnetischen Radiallagerung, und die axiale Lagerung entspricht von der Funktion einer passiven axialen magnetischen Lagerung.

Beim lagerlosen Motor werden im Unterschied zu klassischen Magnetlagern die magnetische Lagerung und der Antrieb des Motors über elektromagnetische Drehfelder realisiert. Typischerweise wird in dem lagerlosen Motor die magnetische Antriebs- und Lagerfunktion durch die Überlagerung zweier magnetischer Drehfelder generiert, die üblicherweise als Antriebs- und Steuerfeld bezeichnet werden. Diese beiden mit den Wicklungen bzw. Spulen 5 des Stators 41 bzw. 42 erzeugten Drehfelder haben in der Regel eine Polpaarzahl, die sich um eins unterscheidet. Hat also beispielsweise das Antriebsfeld die Polpaarzahl p, so hat das Steuerfeld die Polpaarzahl p+1 oder p-1. Dabei werden mit dem Antriebsfeld auf den jeweiligen magnetisch wirksamen Kern 31, 32 in der radialen Ebene wirkende Tangentialkräfte erzeugt, die ein Drehmoment bewirken, was die Rotation um die axiale Richtung A bewirkt. Durch die Überlagerung des Antriebsfelds und des Steuerfelds lässt sich zusätzlich eine beliebig einstellbare Querkraft auf den jeweiligen magnetisch wirksame Kern 31, 32 in der radialen Ebene erzeugen, mit welcher die Position des jeweiligen magnetisch wirksamen Kerns 31, 32 in der radialen Ebene regelbar ist. Es ist also nicht möglich, den elektromagnetischen Fluss, der von den Spulen 53 generiert wird, aufzuteilen in einen (elektro-) magnetischen Fluss, der nur für den Antrieb der Rotation sorgt und einen (elektro-) magnetischen Fluss, der nur die magnetische Lagerung realisiert.

Zur Generierung des Antriebs- und des Steuerfelds ist es einerseits möglich, zwei unterschiedliche Wicklungssysteme zu verwenden, nämlich eines zur Erzeugung des Antriebsfelds und eines zur Erzeugung des Steuerfelds. Die Spulen zur Erzeugung des Antriebsfelds werden dann üblicherweise als Antriebsspulen bezeichnet und die Spulen zur Erzeugung des Steuerfelds als Steuerspulen. Der Strom, der in diese Spulen eingeprägt wird, wird dann als Antriebsstrom bzw. als Steuerstrom bezeichnet. Andererseits ist es aber auch möglich, die Antriebs- und Lagerfunktion mit nur einem einzigen Wicklungssystem - wie in dem hier beschriebenen Ausführungsbeispiel zu generieren, sodass es also keine Unterscheidung zwischen Antriebs- und Steuerspulen gibt. Dies kann so realisiert werden, dass die von einer Kontrolleinrichtung 6 jeweils ermittelten Werte für den Antriebs- und den Steuerstrom rechnerisch -also z. B. mit Hilfe von Software - addiert bzw. überlagert werden und der sich daraus ergebende Gesamtstrom in die jeweilige Spulen 53 eingeprägt wird. In diesem Fall ist es natürlich nicht mehr möglich, zwischen Steuer- und Antriebsspulen zu unterscheiden. In dem hier beschriebenen Ausführungsbeispiel ist die letztgenannte Variante realisiert, das heisst, im ersten und im zweiten Stator 41, 42 gibt es keine Unterscheidung zwischen Antriebs- und Steuerspulen, sondern es gibt jeweils nur ein Wicklungssystem, in dessen sechs Spulen 53 die rechnerisch ermittelte Summe aus dem Antriebsund dem Steuerstrom eingeprägt wird. Es ist aber natürlich auch möglich, den erfindungsgemässen Querstromlüfter 1 mit zwei elektromagnetischen Drehantrieben auszugestalten, wobei im ersten Stator 41 und im zweiten Stator 42 jeweils zwei getrennten Wicklungssysteme, nämlich jeweils mit separaten Antriebsspulen und separaten Steuerspulen, vorgesehen sind.

Die besondere Ausgestaltung des Prinzips des lagerlosen Motors, welche für den erfindungsgemässen Querstromlüfter 1 bevorzugt ist, wird im Folgenden näher erläutert. Wie bereits erwähnt, sind in dem Lager- und Antriebsstator 41 bzw. 42 jeweils nur konzentrierte Wicklungen 53 vorgesehen, wobei auf jedem Spulenkern 5 genau eine konzentrierte Wicklung 53 vorgesehen ist. Im Unterschied zu einer verteilten Wicklung, die sich über mehrere Spulenkerne erstreckt, ist die konzentrierte Wicklung 53 auf genau einem Spulenkern 5 vorgesehen.

Im Unterschied zu dem Konzept des lagerlosen Motors mit verteilten Wicklungen, wie es beispielsweise in der bereits erwähnten US 6,404,794 offenbart wird, hat das hier als bevorzugt vorgeschlagene Konzept mit den konzentrierten Wicklungen 53 den erheblichen Vorteil, dass es eine deutlich erhöhte Leistungsdichte und eine wesentlich kompaktere Ausgestaltung ermöglicht. Mit dem Konzept der konzentrierten Wicklungen 53 lässt sich die Anzahl der Spulenkerne 5 bzw. der Nuten zwischen den Spulenkernen 5 drastisch reduzieren, was auch im Hinblick auf die Fertigung einen erheblichen Vorteil darstellt.

Bei dem hier beschriebenen bevorzugten Ausführungsbeispiel ist also jeder Stator 41, 42 jeweils mit konzentrierten Wicklungen 53 ausgestaltet, wobei jeder Spulenkern 5 genau eine Wicklung (bzw. Spule) 53 trägt. Es sind dieselben konzentrierten Wicklungen 53, welche sowohl die Erzeugung der Lagerkraft als auch die Drehmomentbildung zeitgleich übernehmen. Die konzentrierten Wicklungen 53 stellen also kombinierte Wicklungen zur Erzeugung der Lagerkräfte und des Drehmoments dar. Das bedeutet, es existieren keine separaten Wicklungssysteme zur Erzeugung der Lagerkräfte einerseits und zur Bildung des Drehmoments andererseits. Durch diese Ausgestaltung lässt sich die Anzahl der konzentrierten Wicklungen 53 deutlich reduzieren.

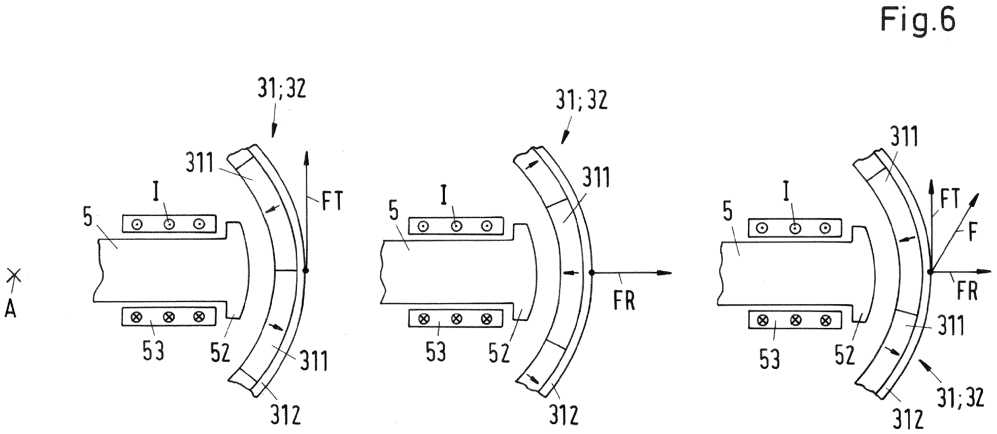

Um das Lager- und Antriebsprinzip zu erläutern, zeigt Fig. 6 in drei verschieden Abbildungen jeweils einen Spulenkern 5 mit dem Polschuh 52 und der auf dem Spulenkern 5 angeordneten konzentrierten Wicklung 53, sowie einen Ausschnitt aus dem ersten magnetisch wirksamen Kern 31. Die drei Abbildungen, die jeweils Momentaufnahmen repräsentieren, unterscheiden sich durch die relative Drehstellung, in welcher sich der erste magnetisch wirksame Kern 31 relativ zu dem Polschuh 52 befindet. In der darstellungsgemäss linken Abbildung liegt gerade die Grenze zwischen zwei in Umfangsrichtung benachbarten Permanentmagneten 311, die in entgegengesetzter Richtung und radial polarisiert sind, dem Polschuh 52 zentral gegenüber. In der darstellungsgemäss mittleren Abbildung liegt gerade einer der Permanentmagnete 311 dem Polschuh 52 zentral gegenüber. In der darstellungsgemäss rechten Abbildung ist eine beliebige Zwischenposition gezeigt, in welcher weder eine Grenze zwischen zwei benachbarten Permanentmagneten 311 dem Zentrum des Polschuhs 52 genau gegenüberliegt, noch einer der Permanentmagnete 311 bezüglich des Polschuhs 52 in einer zentrierten Stellung ist.

In Fig. 6 zeigen die Pfeile ohne Bezugszeichen wiederum die Magnetisierung des jeweiligen Permanentmagneten 311 an, und die Stromlinien I zeigen den Strom durch die konzentrierte Wicklung 53 an.

In der darstellungsgemäss linken Abbildung ist der erste magnetisch wirksame Kern 31 relativ zum Polschuh so orientiert, dass sich die auf die beiden Permanentmagnete 311 wirkenden radialen Kraftkomponenten gerade gegenseitig aufheben, d.h. kompensieren, während sich die beiden tangentialen Kraftkomponenten addieren, sodass insgesamt die in tangentialer Richtung gerichtete Kraft FT auf den ersten magnetisch wirksamen Kern 31 wirkt. In der mittleren Abbildung wirkt als resultierende Kraft auf den Permanentmagneten die in radialer Richtung gerichtete Kraft FR. In der allgemeinen Orientierung, die in der darstellungsgemäss rechten Abbildung dargestellt ist, wirkt auf den ersten magnetisch wirksamen Kern 31 eine Kraft F, die sowohl eine von Null verschiedene tangentiale Kraftkomponente FT umfasst, die in tangentialer Richtung gerichtet ist, als auch eine von Null verschiedene radiale Kraftkomponente FR, die in radialer Richtung gerichtet ist.

Die tangentiale Kraftkomponente FT bewirkt ein Drehmoment auf den ersten magnetisch wirksamen Kern 31. Über die radiale Kraftkomponente FR kann eine Kraft auf den ersten magnetisch wirksamen Kern 31 ausgeübt werden, um dessen Position in der radialen Ebene zu verändern bzw. zu regeln, wobei - wie bereits erwähnt - die radiale Ebene die x-y-Ebene eines kartesischen Koordinatensystems im ersten Stator 41 darstellt, dessen z-Achse in axialer Richtung A verläuft.

Die Drehstellung, in welcher sich der erste magnetisch wirksame Kern 31 relativ zu dem Polschuh 52 befindet, lässt sich durch einen Drehwinkel beschreiben. Wie dies Fig. 6 zeigt, existieren für jeden Spulenkern 5 bzw. Polschuh 52 Drehwinkel, bei welchen keine radiale Kraftkomponente FR oder keine tangentiale Kraftkomponente FT erzeugt werden kann. Auch ist die Richtung der Kraftwirkung eines Polschuhs 52 auf den ersten magnetisch wirksamen Kern 31, also die Richtung der Kraft F in Fig. 6, nicht frei wählbar, sondern abhängig von dem Drehwinkel. Da Drehmomente nur mittels tangentialer Kraftkomponenten FT erzeugt werden können, existieren Drehwinkel, bei denen ein gegebener Polschuh 52 keinen Beitrag zum Drehmoment leisten kann (siehe beispielsweise die mittlere Abbildung in Fig. 6). Es sollten daher mehrere Polschuhe 52 an der Drehmomentbildung beteiligt sein.

Analoges gilt für die Erzeugung einer auf den ersten magnetisch wirksamen Kern 31 wirkenden Lagerkraft, welche im Allgemeinen aus einer x- und einer y-Komponente in der radialen Ebene besteht. Für jeden Polschuh 52 existieren Drehwinkel, bei welchen beispielsweise eine Erzeugung einer Kraft mit einer von Null verschiedenen x-Komponente nicht möglich ist. Zur Erzeugung einer Lagerkraft mit vorgegebener Stärke und Richtung ist das Zusammenwirken mehrerer Polschuhe 52 notwendig.

Daher sind für den ersten elektromagnetischen Drehantrieb (und natürlich auch für den zweiten elektromagnetischen Drehantrieb, falls vorhanden) solche Ausführungsformen bevorzugt, bei denen für jeden Drehwinkel, das heisst für jede Drehstellung des ersten magnetisch wirksamen Kerns 31 relativ zum ersten Stator 41, ein Drehmoment sowie eine Lagerkraft mit frei wählbarer Richtung und Stärke erzeugt werden kann. Durch diese Massnahme lässt sich eine stabile Drehzahl- und Lageregelung erzielen.

Eine mögliche Ausgestaltung, welche diese Anforderung erfüllt, ist die in Fig. 4 dargestellte Ausführungsform, bei welcher der erste magnetisch wirksame Kern 31 die genau vier Permanentmagnete 311 umfasst, und der erste Stator 41 die genau sechs Spulenkerne 5 mit den genau sechs Polschuhen 52, wobei auf jedem Spulenkern 5 genau eine konzentrierte Wicklung 53 angeordnet ist.

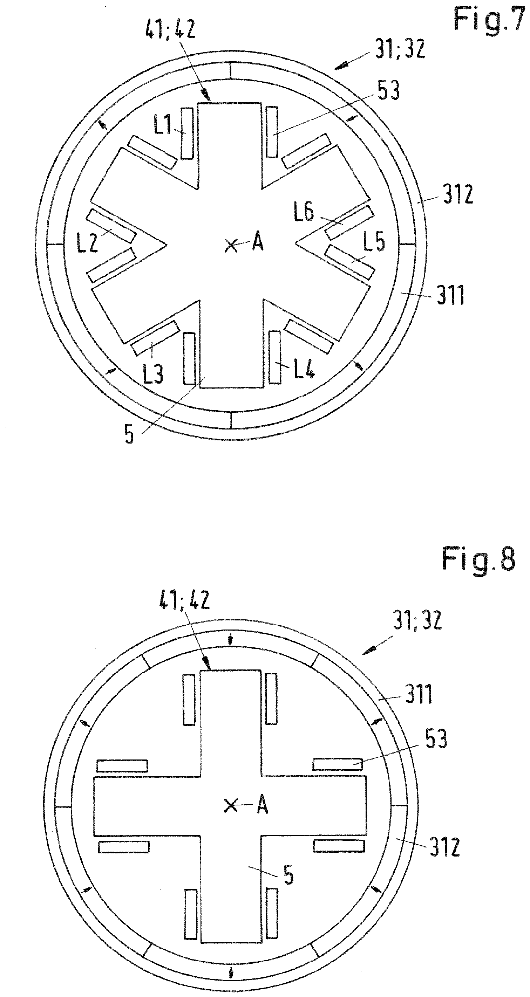

Diese Anordnung ist in Fig. 7 nochmals in schematischer Weise gezeigt, wobei auf eine explizite Darstellung der Polschuhe 52 aus Gründen der besseren Übersicht verzichtet wurde. Auch die Ummantelung 313 ist in Fig. 7 nicht dargestellt. Die sechs konzentrierten Wicklungen 53, die von den sechs Spulenkernen 5 des ersten Stators 41 getragen werden, sind in Fig. 7 zur Unterscheidbarkeit mit den Bezugszeichen L1 bis L6 bezeichnet, d.h. jede der in Fig. 7 mit L1 bis L6 bezeichneten Wicklungen ist eine der konzentrierten Wicklungen 53. Mit i1 bis i6 werden die Ströme bezeichnet, welche in die jeweilige konzentrierte Wicklung L1 bis L6 eingespeist werden. Das heisst, i1 bezeichnet den Strom, welcher in die konzentrierte Wicklung L1 eingespeist wird, i2 den Strom, der in die konzentrierte Wicklung L2 eingespeist wird, usw. Jede konzentrierte Wicklung L1-L6 bildet eine elektrische Phase.

Bei der in Fig. 7 dargestellten Ausgestaltung ist eine Ansteuerung möglich, bei der für jeden beliebigen Drehwinkel, also für jede Drehstellung des ersten magnetisch wirksamen Kerns 31 relativ zum ersten Stator 41, eine in Richtung und Betrag beliebige Lagerkraft, sowie ein konstantes, vom Betrag her beliebiges Drehmoment erzeugbar ist.

Zur Ansteuerung der konzentrierten Wicklungen L1-L6 umfasst die in der Kontrolleinrichtung 6 vorgesehene Leistungselektronik beispielsweise sechs Halbbrücken, nämlich für jede konzentrierte Wicklung L1-L6 jeweils eine. Da für jede Halbbrücke zwei Leistungsschalter benötigt werden, sind insgesamt zwölf Leistungsschalter für jeden elektromagnetischen Drehantrieb vorgesehen. Vorzugsweise werden jeweils drei der konzentrierten Wicklungen L1-L6 zu einem Dreiphasensystem mit einem schwebendem Sternpunkt zusammengeschaltet. Beispielsweise werden die konzentrierten Wicklungen L1, L3 und L5 zu einem Dreiphasensystem zusammengeschaltet, und es werden die konzentrierten Wicklungen L2, L4 und L6 zu einem Dreiphasensystem zusammengeschaltet.

Die Ströme i1 bis i6 werden vorzugsweise nach dem folgenden Schema geregelt. Von einem Drehzahlregelalgorithmus wird ein Antriebssollstrom $\hat{I}_D$ vorgegeben. Dieser wird zusammen mit einem Drehwinkel θ, welcher die Drehstellung des ersten magnetisch wirksamen Kerns 31 relativ zum ersten Stator 41 beschreibt, zu einem statororientierten Dreiphasensystem umgerechnet, welches die folgenden Komponenten hat: $i_{D,1} = \hat{I}_D \cdot \cos(\theta)$

$$i_{D,2} = \hat{I}_D \cdot \cos\left(\theta - \tfrac{2}{3}\pi\right)$$

$$i_{D,3} = \hat{I}_D \cdot \cos\left(\theta + \tfrac{2}{3}\pi\right)$$

Ebenso werden der für die aktive magnetische Lagerung des magnetisch wirksamen Kerns 31 benötigte Lagerstrom $\hat{I}_B$, sowie die Lagerkraftrichtung $\varphi_B$, welche von einem Positionsregelalgorithmus vorgegeben werden, zu einem statororientierten Dreiphasensystem umgerechnet:

$$i_{B,1} = \hat{I}_B \cdot \sin(\theta + \varphi_B)$$

$$i_{B,2} = \hat{I}_B \cdot \sin\left(\theta - \tfrac{2}{3}\pi + \varphi_B\right)$$

$$i_{B,3} = \hat{I}_B \cdot \sin\left(\theta + \tfrac{2}{3}\pi + \varphi_B\right)$$

Da die konzentrierten Wicklungen 53, nämlich L1 bis L6, sowohl die für die magnetische Lagerung benötigte Lagerkraft als auch das für den Antrieb benötigte Drehmoment erzeugen, müssen die Lager- und Antriebsströme überlagert werden, woraus sich für die konzentrierten Wicklungen L1 - L6 die folgenden Ströme i1 - i6 ergeben, welche in die jeweilige konzentrierte Wicklung L1 - L6 eingespeist werden.

$$i_1 = i_{D,1} + i_{B,1}$$

$$i_2 = i_{D,2} - i_{B,3}$$

$$i_3 = i_{D,3} + i_{B,2}$$

$$i_4 = i_{D,1} - i_{B,1}$$

$$i_5 = i_{D,2} + i_{B,3}$$

$$i_6 = i_{D,3} - i_{B,2},$$

Durch diese Ansteuerung entsteht dann beim aktuellen Drehwinkel θ die gewünschte Lagerkraft, deren Richtung durch $\varphi_B$ festgelegt ist, sowie das gewünschte Drehmoment.

Ausser der hier beschriebenen Ausgestaltung, bei welcher der erste bzw. zweite Stator 41 bzw. 42 jeweils genau sechs Spulenkerne 5 umfasst, die jeweils genau eine konzentrierte Wicklung 53, bzw. L1 bis L6 tragen, und bei welcher ferner der erste bzw. zweite magnetisch wirksame Kern 31 bzw. 32 jeweils mit vier Permanentmagneten 311 ausgestaltet ist, sodass der erste bzw. zweite magnetisch wirksame Kern 31 bzw. 32 jeweils die Polpaarzahl zwei hat, gibt es auch noch andere Varianten, von denen einige bevorzugte in den Fig. 8 bis Fig. 12 in einer schematischen Darstellung veranschaulicht sind. Die Darstellungen in den Fig. 8 bis Fig. 12 entsprechen jeweils derjenigen in Fig. 7, d.h. auch in den Fig. 8 bis Fig. 12 ist jeweils die Ummantelung 313 nicht dargestellt. Alle Varianten können sowohl für den ersten elektromagnetischen Drehantrieb mit dem ersten Stator 41 und dem ersten magnetisch wirksamen Kern 31 eingesetzt werden, als auch für den zweiten elektromagnetischen Drehantrieb mit dem zweiten Stator 42 und dem zweiten magnetischen Kern 32. Ist an jedem Ende 21, 22, des Laufrads 2 jeweils ein elektromagnetischer Drehantrieb vorgesehen, so sind dieser erste elektromagnetische Drehantrieb und zweite elektromagnetische Drehantrieb vorzugsweise zumindest bezüglich des ersten bzw. zweiten Stators 41 und des ersten bzw. zweiten magnetisch wirksamen Kerns 31 bzw. 32 in gleicher Weise ausgestaltet.

Ferner ist allen Varianten in den Fig. 8 bis Fig. 12 gemeinsam, dass jeweils auf jedem Spulenkern 5 genau eine konzentrierte Wicklung 53 vorgesehen ist, dass jeder Permanentmagnet 311 jeweils als Ringsegment ausgestaltet ist, dass sich die Permanentmagnete 311 jedes magnetisch wirksamen Kerns 31 bzw. 32 jeweils zu einem Ring ergänzen, und dass jeder Permanentmagnet 311 in radialer Richtung magnetisiert ist, wobei in Umfangsrichtung benachbart angeordnete Permanentmagnete 311 jeweils entgegengesetzt magnetisiert sind. Die jeweilige Magnetisierung ist wiederum durch die Pfeile ohne Bezugszeichen dargestellt. Zudem sind für jeden magnetisch wirksamen Kern 31 bzw. 32 alle Permanentmagnete 311 dieses magnetisch wirksamen Kerns 31 bzw. 32 in Umfangsrichtung des jeweiligen magnetischen Kerns 31 bzw. 32 gesehen gleich lang ausgestaltet.

Fig. 8 zeigt eine Variante, bei welcher der erste bzw. zweite magnetisch wirksame Kern 31 bzw. 32 sechs Permanentmagnete 311 umfasst und sechspolig, d.h. mit der Polpaarzahl drei ausgestaltet ist. Der erste bzw. zweite Stator 41 bzw. 42 ist mit genau vier Spulenkernen 5 ausgestaltet, wobei auf jedem Spulenkern 5 genau eine konzentrierte Wicklung 53 angeordnet ist.

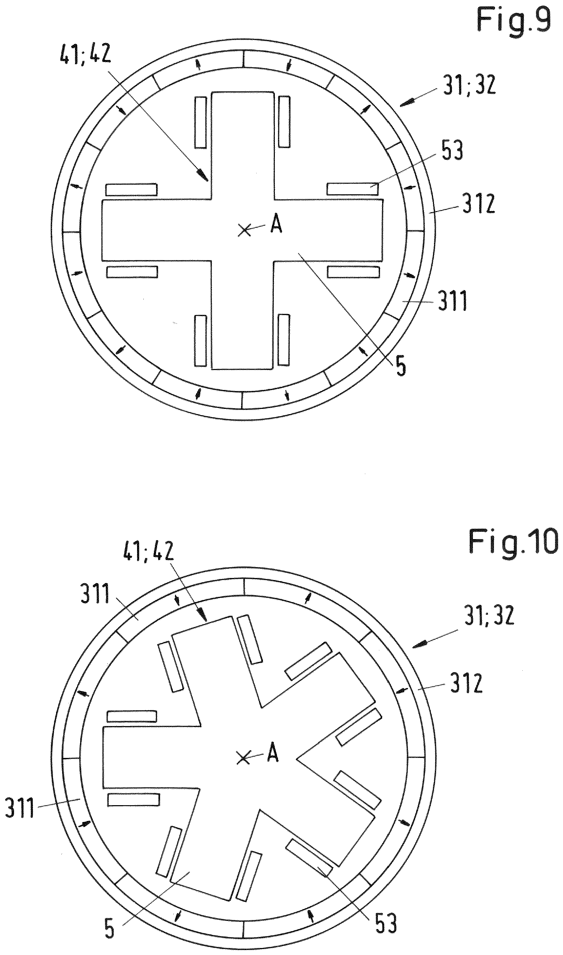

Fig. 9 zeigt eine Variante, bei welcher der erste bzw. zweite magnetisch wirksame Kern 31 bzw. 32 zwölf Permanentmagnete 311 umfasst und zwölfpolig, d.h. mit der Polpaarzahl sechs ausgestaltet ist. Der erste bzw. zweite Stator 41 bzw. 42 ist mit genau vier Spulenkernen 5 ausgestaltet, wobei auf jedem Spulenkern 5 genau eine konzentrierte Wicklung 53 angeordnet ist.

Fig. 10 zeigt eine Variante, bei welcher der erste bzw. zweite magnetisch wirksame Kern 31 bzw. 32 acht Permanentmagnete 311 umfasst und achtpolig, d.h. mit der Polpaarzahl vier ausgestaltet ist. Der erste bzw. zweite Stator 41 bzw. 42 ist mit genau fünf Spulenkernen 5 ausgestaltet, wobei auf jedem Spulenkern 5 genau eine konzentrierte Wicklung 53 angeordnet ist.

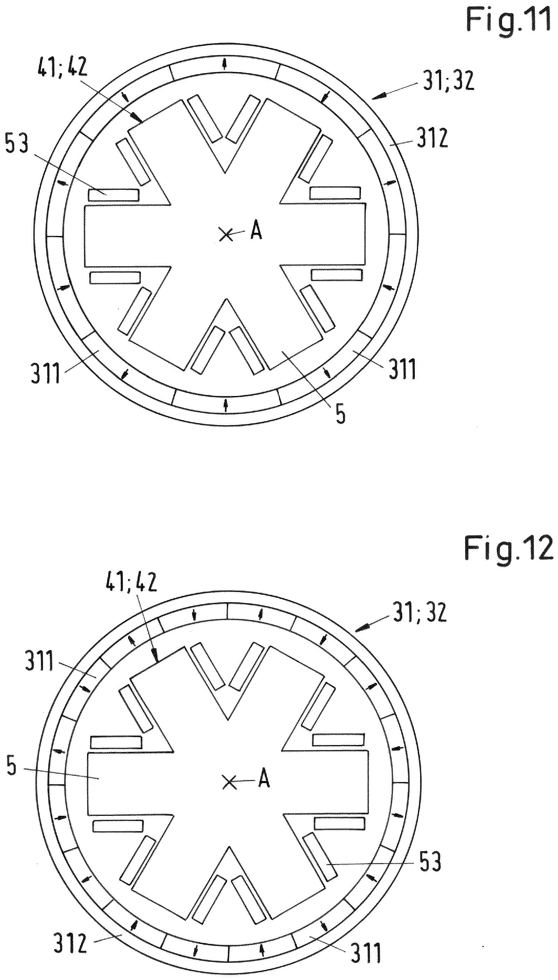

Fig. 11 zeigt eine Variante, bei welcher der erste bzw. zweite magnetisch wirksame Kern 31 bzw. 32 zehn Permanentmagnete 311 umfasst und zehnpolig, d.h. mit der Polpaarzahl fünf ausgestaltet ist. Der erste bzw. zweite Stator 41 bzw. 42 ist mit genau sechs Spulenkernen 5 ausgestaltet, wobei auf jedem Spulenkern 5 genau eine konzentrierte Wicklung 53 angeordnet ist.

Fig. 12 zeigt eine Variante, bei welcher der erste bzw. zweite magnetisch wirksame Kern 31 bzw. 32 sechzehn Permanentmagnete 311 umfasst und sechzehnpolig, d.h. mit der Polpaarzahl acht ausgestaltet ist. Der erste bzw. zweite Stator 41 bzw. 42 ist mit genau sechs Spulenkernen 5 ausgestaltet, wobei auf jedem Spulenkern 5 genau eine konzentrierte Wicklung 53 angeordnet ist.

Die Sensorik, z. B. zur Positionsbestimmung des magnetisch wirksamen Kerns 31, 32, die Ansteuerung, die Versorgung und die Regelung des als lagerloser Motor ausgestalteten Drehantriebs sind dem Fachmann hinlänglich bekannt und bedürfen hier keiner weiteren Erläuterung. Mit beispielhaftem Charakter sind in Fig. 4 einige Sensoren 7 eingezeichnet.

Bei dem ersten Ausführungsbeispiel des erfindungsgemässen Querstromlüfters 1 sind vorzugsweise nicht nur der erste und der zweite magnetisch wirksame Kern 31, 32 vollständig von der jeweiligen Ummantelung 313 umschlossen, sondern auch der erste Stator 41 und der zweite Stator 42 sind in einem ersten Statorgehäuse 91 bzw. in einem zweiten Statorgehäuse 92 eingekapselt, wobei jedes Statorgehäuse 91, 92 aus einem niederpermeablen Material besteht. Vorzugsweise ist dieses niederpermeable Material ein Kunststoff oder eine Keramik bzw. ein keramischer Werstoff oder ein metallisches Material, insbesondere eine korrosionsbeständige Metalllegierung mit schlechter elektrischer Leitfähigkeit wie beispielsweise eine Titan-Aluminium Legierung, insbesondere Ti6Al-4V / Ti6 oder eine Nickel-Chrom-Molybdän Legierung.

Vorzugsweise bestehen die Ummantelungen 313 der magnetisch wirksamen Kerne 31, 32 und die Statorgehäuse 91, 92 aus einem Kunststoff oder aus einer Keramik bzw. einem keramischen Werstoff oder aus einem Metall oder aus einer korrosionsbeständigen Metalllegierung mit schlechter elektrischer Leitfähigkeit wie beispielsweise eine Titan-Aluminium Legierung, insbesondere Ti6Al-4V / Ti6, oder eine Nickel-Chrom-Molybdän Legierung. Wenn die Ummantelungen 313 und/oder die Statorgehäuse aus einem metallischen Material gefertigt sind, ist dieses metallische Material vorzugsweise ein solches, das eine geringe elektrische Leitfähigkeit aufweist, um dadurch insbesondere Wirbelstromverluste in den Ummantelungen 313 und den Statorgehäusen 91, 92 klein zu halten. Insbesondere ist es auch möglich, dass die Ummantelungen 313 und die Statorgehäuse 91, 92 aus unterschiedlichen Materialien bestehen. So können beispielsweise die Ummantelungen 313 aus einem ersten Kunststoff oder einem ersten keramischen Material oder aus einem ersten metallischen Material bestehen, während die Statorgehäuse 91, 92 aus einem zweiten Kunststoff oder einem zweiten keramischen Material oder einem zweiten metallischen Material bestehen. Dabei können der erste und der zweite Kunststoff derselbe Kunststoff sein, oder der erste und der zweite Kunststoff sind verschiedene Kunststoffe. Auch können das erste und das zweite keramische Material identisch oder verschieden sein, und das erste und das zweite metallische Material können identisch oder verschieden sein. Bei den metallischen Materialien sind insbesondere solche Metalllegierungen bevorzugt, die korrosionsbeständig sind und eine geringe elektrische Leitfähigkeit aufweisen.

Ein niederpermeables Material ist ein Material, das nur eine geringe magnetische Permeabilität (magnetische Leitfähigkeit) aufweist. Als niederpermeabel werden im Rahmen dieser Anmeldung -wie allgemein üblich- solche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl die kleiner als 1.1 ist. Das niederpermeable Material, weist daher eine deutlich geringere magnetische Leitfähigkeit auf als beispielsweise das ferromagnetische Material, aus welchem die Spulenkerne 5 gefertigt sind.

Der erste und/oder der zweite Kunststoff können beispielsweise einer der folgenden Kunststoffe sein: Polyethylene (PE), Low Density Polyethylene (LDPE), Ultra Low Density Polyethylene (ULDPE), Ethylene Vinyl Acetate (EVA), Polyethylene Terephthalate (PET), Polyvinylchlorid (PVC), Polypropylene (PP), Polyurethan (PU), Polyvinylidene Fluoride (PVDF), Acrylonitrile Butadiene Styrene (ABS), Polyacryl, Polycarbonate (PC), oder Silicone. Für viele Anwendungen sind auch die unter dem Markennamen Teflon bekannten Materialien Polytetrafluoroethylene (PTFE) und und Perfluoralkoxy-Polymere (PFA) als erster und/oder zweiter Kunststoff geeignet.

Vorzugsweise wird einer dieser Kunststoffe als erster Kunststoff verwendet, um die magnetisch wirksamen Kerne 31, 32 hermetisch einzukapseln, und einer dieser Kunststoffe wird als zweiter Kunststoff für die Statorgehäuse verwendet, um die Statoren 41, 42 hermetisch einzukapseln. Da es für das Verständnis ausreichend ist, wird im Folgenden nicht mehr zwischen dem ersten und dem zweiten Kunststoff unterschieden.

Auch ist es möglich, dass jede Schaufel 8 des Laufrads 2 jeweils eingekapselt und vollständig, vorzugsweise hermetisch, umschlossen ist. Es ist aber auch möglich, die Schaufeln 8 aus einem besonders resistenten Material zu fertigen, beispielsweise aus einem metallischen Material oder aus einem Kunststoff.

Da alle vorangehend genannten Kunststoffe bzw. metallische oder keramischen Materialien niederpermeabel sind, also den magnetischen Fluss schlecht leiten, sind die in radialer Richtung zwischen dem ersten bzw. zweiten magnetisch wirksamen Kern 31, 32 einerseits und den Polschuhen 52 der Spulenkerne 5 des ersten bzw. zweiten Stators 41, 42 andererseits angeordneten Ummantelungen 313 und Statorgehäuses 91 bzw. 92 dem magnetischen Luftspalt zwischen dem magnetisch wirksamen Kern 31 bzw. 32 und dem Stator 41 bzw. 42 zuzurechnen. Der magnetische Luftspalt zwischen dem magnetisch wirksamen Kern 31 bzw. 32 und dem Stator 41 bzw. 42 ist somit gleich dem Abstand in radialer Richtung zwischen dem magnetisch wirksamen Kern 31 bzw. 32 und den Polschuhen 52 der Spulenkerne 5 des Stators 41 bzw. 42. Daher bedingt die hermetische Kapselung der magnetisch wirksamen Kerne 31, 32 und die hermetische Kapselung der Statoren 41, 42 einen magnetischen Luftspalt, der im Vergleich zu anderen lagerlosen Motoren gross ist. Bei zentriertem magnetisch wirksamen Kern 31, 32 beträgt die Breite des magnetischen Luftspalts beispielsweise 4 mm oder sogar noch mehr.

Die beiden Statorgehäuse 91 und 92 sind zumindest im Wesentlichen identisch ausgestaltet. Daher wird im Folgenden nur auf das erste Statorgehäuse 91 Bezug genommen, wobei die Ausführungen in gleicher oder sinngemäss gleicher Weise auch für das zweite Statorgehäuse 92 gelten.

Das erste Statorgehäuse 91 umfasst einen ersten Gehäuseabschnitt 93 sowie einen zweiten Gehäuseabschnitt 94, die bezüglich der axialen Richtung A benachbart angeordnet sind, wobei der erste Gehäuseabschnitt 93 im Inneren des Laufrads 2 angeordnet ist und der zweite Gehäuseabschnitt 94 ausserhalb des Laufrads 2. Jeder Gehäuseabschnitt 93, 94 hat eine zylindrische Form, wobei der Aussendurchmesser des zweiten Gehäuseabschnitts 94 grösser ist als der Aussendurchmesser des ersten Gehäuseabschnitts 93. Insgesamt umschliesst das erste Statorgehäuse 91 also einen Raum, der entsteht, wenn man ein L um den langen Schenkel rotiert.

Der Aussendurchmesser des ersten Gehäuseabschnitts 93 ist kleiner als der Innendurchmesser des ersten magnetisch wirksamen Kerns 31 des Laufrads 2, sodass der erste Gehäuseabschnitt 93 in axialer Richtung A in das Laufrad 2 einführbar ist. Der erste Stator 41 des ersten elektromagnetischen Drehantriebs ist im ersten Gehäuseteil 93 des ersten Statorgehäuses 91 angeordnet, sodass der erste Stator 41 vom ersten magnetisch wirksamen Kern 31 des Laufrads 2 umgeben wird, wenn das erste Statorgehäuse 91 in das Laufrad 2 eingeführt ist. Hieraus resultiert die für einen Aussenläufer übliche Anordnung eines Drehantriebs, bei welcher der erste Stator 41 radial innenliegend im ersten magnetisch wirksamen Kern 31 angeordnet ist.

Der Aussendurchmesser des zweiten Gehäuseabschnitts 94 des ersten Statorgehäuses 91 ist so bemessen, dass er mindestens so gross ist wie der Aussendurchmesser des ersten magnetisch wirksamen Kerns 31, sodass der zweite Gehäuseabschnitt 94 nicht in das Laufrad 2 eingeschoben werden kann. Der zweite Gehäuseabschnitt 94 kann dann beispielsweise an dem Lüftergehäuse 10 anliegen (Fig. 3), welches einen Anschlag für den zweiten Gehäuseabschnitt 94 bildet, sodass das erste Statorgehäuse 91 in einer wohldefinierten Position ist.

Im zweiten Gehäuseabschnitt 94 des ersten Statorgehäuses 91, ist die Kontrolleinrichtung 6 für den ersten Stator 41 angeordnet. In analoger Weise ist in dem zweiten Gehäuseabschnitt 94 des zweiten Statorgehäuses 92 eine Kontrolleinrichtung 6 für den zweiten Stator 42 vorgesehen. Die beiden Kontrolleinrichtungen 6 für den ersten Stator 41 bzw. für den zweiten Stator 42 können unabhängig voneinander arbeiten. So regelt beispielsweise die Kontrolleinrichtung 6 für den ersten Stator 41 die radiale Position des ersten magnetisch wirksamen Kerns 31 relativ zum ersten Stator 41, und unabhängig davon kann die Kontrolleinrichtung 6 für den zweiten Stator 42 die radiale Position des zweiten magnetisch wirksamen Kerns 32 relativ zum zweiten Stator 42 regeln. Mit den beiden Kontrolleinrichtungen 6 wird der Querstromlüfter 1 angetrieben und geregelt. Jede Kontrolleinrichtung 6 umfasst die Leistungselektronik, mit welcher der Strom für die Spulen 53 des jeweiligen Stators 41 bzw. 42 generiert wird, sowie eine Regel- und Steuereinrichtung, mit welcher der Antrieb des Laufrads 2 sowie die radiale Position des jeweiligen magnetisch wirksamen Kerns 31, 32 geregelt, bzw. gesteuert wird. Die Leistungselektronik ist vorzugsweise als Platine bzw. PCB (printed circuit board) ausgestaltet. Ferner kann die Kontrolleinrichtung 6 verschiedene Sensoren 7 umfassen sowie eine Auswerteeinheit zur Verarbeitung der von Sensoren 7 gelieferten Signale. Dadurch, dass auch die gesamte Kontrolleinrichtung 6 im jeweiligen Statorgehäuse 41 bzw. 42 angeordnet ist, ergibt sich eine äusserst kompakte und platzsparende Ausgestaltung des Querstromlüfters 1. Zudem ist die Kontrolleinrichtung 6 im hermetisch dichten Statorgehäuse 41 bzw. 42 auch gegen chemisch aggressive Umgebungsbedingungen sowie gegen Staub und Verschmutzung geschützt.

An jedem Statorgehäuse 91, 92 ist ferner eine Durchführung 95 für ein Kabel vorgesehen, über welches die Kontrolleinrichtung 6 mit Energie versorgt wird. Das Kabel kann ferner auch für die Übertragung von analogen oder digitalen Signalen in die Kontrolleinrichtung 6 oder aus der Kontrolleinrichtung 6 genutzt werden. Dazu ist das Kabel jeder Kontrolleinrichtung 6 beispielsweise mit einer Spannungsquelle und mit einer Kommunikationsschnittstelle verbunden.

Da somit sowohl der erste und der zweite magnetisch wirksame Kern 31, 32 als auch der erste und der zweite Stator 41, 42 sowie die beiden Kontrolleinrichtungen 6 hermetisch gekapselt sind, eignet sich der Querstromlüfter 1 hervorragend für den Einsatz in problematischen Umgebungen, wie sie beispielsweise in der Halbleiterindustrie vorkommen. Hier können korrosive Dämpfe, Gase oder auch ätzende Substanzen vorhanden sein, die herkömmliche Querstromlüfter bereits nach kurzer Betriebsdauer erheblich schädigen können. Insbesondere ist der erfindungsgemässe Querstromlüfter 1 für die Verwendung in Excimerlasern und allgemein in der Lasertechnik geeignet. Der Querstromlüfter 1 ist aufgrund des lagerlosen Konzepts sowie der hermetischen Kapselung der Statoren 41, 42, der Kontrolleinrichtungen 6 und der magnetisch wirksamen Kerne 31, 32 insbesondere auch für den Einsatz in hochreinen Umgebungen oder für die Förderung hochreiner Gase geeignet, beispielsweise in der pharmazeutischen Industrie oder in der Biotechnologie.

Die Kontrolleinrichtung 6 jeweils in einem der zweiten Gehäuseabschnitte 94 anzuordnen, hat ferner den Vorteil einer räumlichen Trennung zwischen dem im ersten Gehäuseabschnitt 93 angeordneten Stator 41, 42 und der im zweiten Gehäuseabschnitt 94 angeordneten Kontrolleinrichtung 6. Durch die räumliche Trennung ist die Kontrolleinrichtung 6 viel weniger der von dem Stator 41, 42 generierten Wärme ausgesetzt. Diese Wärme entsteht beispielsweise durch den Betrieb des Drehantriebs, insbesondere durch den Stromfluss durch die Spulen 53 des Stators 41, 42, durch Wirbelstromverluste und durch Hystereseverluste. Auch ist es möglich, dass durch das zu fördernde Fluid Wärme in den ersten Gehäuseabschnitt 93 des Statorgehäuses 91, 92 eingetragen wird. In einem Excimerlaser kann beispielsweise die Temperatur des zu fördernden Gases bis zu 200°C oder sogar noch mehr betragen. Da in der Regel der elektromagnetische Drehantrieb und insbesondere der Stator 41, 42 höheren Temperaturen ausgesetzt werden kann als die Kontrolleinrichtung 6 mit ihren elektronischen Komponenten, ist die räumliche Beabstandung von Stator 41, 42 und Kontrolleinrichtung 6 besonders vorteilhaft.

Um insbesondere die Kontrolleinrichtung 6 besser vor einer zu starken Erwärmung zu schützen, kann es vorteilhaft sein, in jedem Statorgehäuse 91, 92 eine thermische Schutzschicht 96 (Fig. 3) vorzusehen, welche zwischen dem Stator 41, 42 und der Kontrolleinrichtung 6 angeordnet ist.

Als eine weitere vorteilhafte Massnahme ist es möglich, jeden Stator 41, 42 kühlbar auszugestalten.

Dies kann beispielsweise realisiert werden, indem zwischen den Spulenkernen 5, also dort, wo auch die Spulen 53 verlaufen, Kühlleitungen 97 (Fig. 4) vorgesehen werden, durch welche ein fluider Wärmeträger, beispielsweise Wasser oder Luft, zirkuliert wird, welcher die von den Spulen 53 generierte oder sonstige Wärme zumindest teilweise aufnimmt und abtransportiert. Die Zu- und Abführung des Wärmeträgers kann dabei durch die Durchführung 95 erfolgen. Natürlich können das erste und das zweite Statorgehäuse 91, 92 auch von aussen gekühlt werden.

Ein weiterer Vorteil des erfindungsgemässen Querstromlüfters 1 ist es, dass das Laufrad 2 ohne Welle ausgestaltet werden kann. Die bei bekannten Querstromlüftern vorgesehene Welle, die sich in axialer Richtung durch das Laufrad hindurch erstreckt und zentral in der Mitte des Laufrads angeordnet ist, wobei die Welle an beiden axialen Enden aus dem Laufrad heraustritt und dieses bezüglich der axialen Richtung überragt, ist bei dem erfindungsgemässen Querstromlüfter 1 nicht mehr notwendig, sodass auf eine solche Welle verzichtet werden kann. Dies bedeutet insbesondere unter konstruktiven Aspekten eine deutliche Vereinfachung und verschafft zusätzlichen freien Raum im Inneren des Laufrads 2.

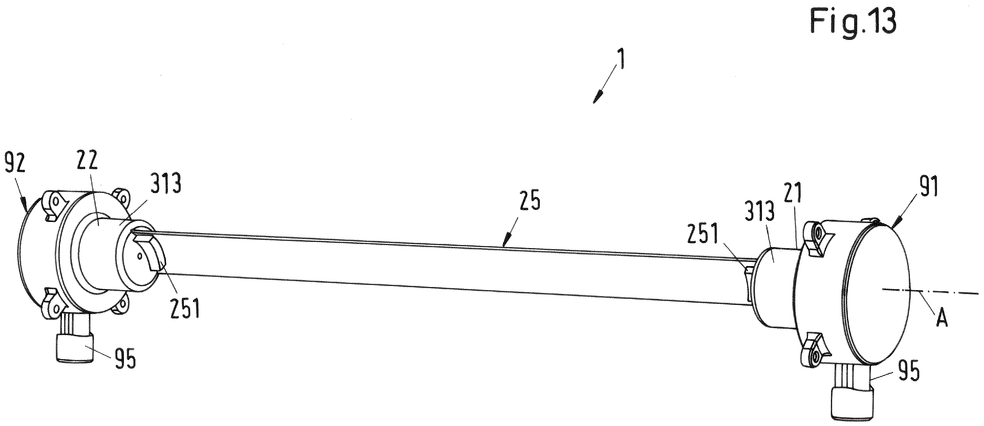

Das Fehlen einer Welle im Inneren des Laufrads 2 hat ferner den Vorteil, dass in sehr einfacher Weise ein oder mehrere Strömungsleitelement zur Führung des Fluidstroms innerhalb des Laufrades 2 angeordnet werden können. Eine solche Variante ist in Fig. 13 gezeigt. Die Darstellung in Fig. 13 entspricht im Wesentlichen der Darstellung in Fig. 1. Fig. 13 zeigt eine perspektivische Darstellung einer Variante des ersten Ausführungsbeispiels, wobei zum besseren Verständnis in Fig. 13 das Laufrad 2 nicht dargestellt ist. Bei dieser Variante ist im Inneren des Laufrads 2 ein Leitblech 25 vorgesehen, welches sich in axialer Richtung A von dem ersten Statorgehäuse 91 bis zu dem zweiten Statorgehäuse 92 erstreckt. An dem jeweiligen Statorgehäuse 91, 92 ist das Leitblech 25 jeweils mit einem lösbaren Verbindungselement 251 an dem Statorgehäuse 91, 92 fixiert. Die Verbindung mit dem jeweiligen Statorgehäuse 91 bzw. 92 ist vorzugsweise einfach lösbar, sodass das Leitblech 25 in einfacher Weise eingesetzt oder entfernt werden kann. Dazu kann jedes Verbindungselement 251 beispielsweise derart ausgestaltet sein, dass es in eine Ausnehmung im jeweiligen Statorgehäuse 91, 92 einrasten kann.

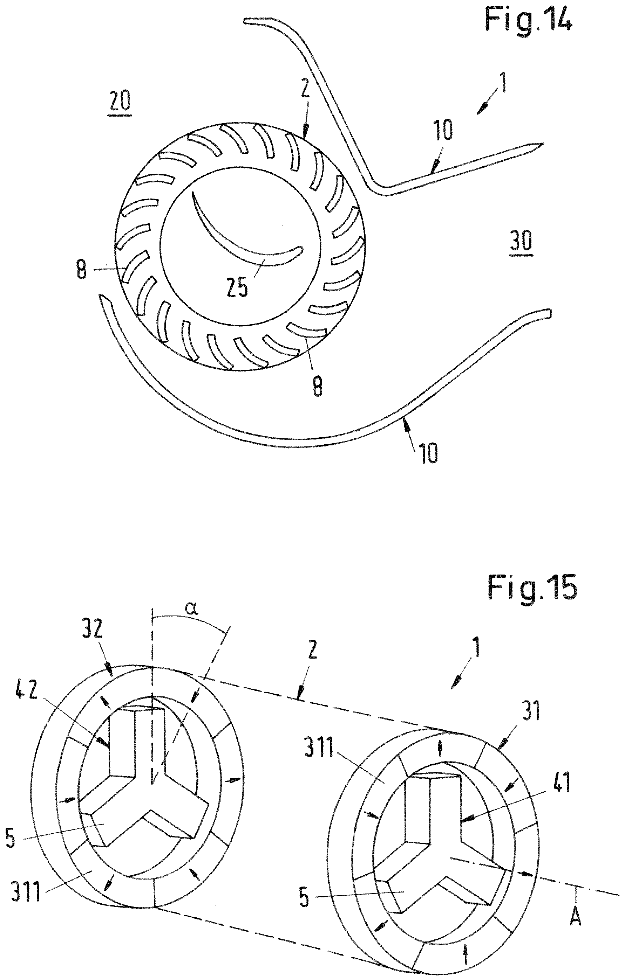

Zum besseren Verständnis zeigt Fig. 14 noch einen Querschnitt durch diese Variante mit dem Leitblech 25 in einem Schnitt senkrecht zur axialen Richtung A. In Fig. 14 ist das Laufrad 2 dargestellt mit dem in seinem Inneren angeordneten Leitblech 25. Ferner ist auch das Lüftergehäuse 10 dargestellt, sowie der Ansaugbereich 20, durch welchen das zu fördernde Fluid über die gesamte Länge des Laufrads 2 in das Innere des Laufrads 2 angesaugt wird, und der Ausstossbereich 30, durch welchen das zu fördernde Fluid über die gesamte Länge des Laufrads 2 aus dem Inneren des Laufrads 2 ausgestossen wird. Wie dies in Fig. 14 zu erkennen ist, ist das Leitblech 25 senkrecht zur axialen Richtung A gekrümmt ausgestaltet, um den Fluidstrom möglichst sanft aus dem Inneren des Laufrads 2 in den Ausstossbereich 30 umzulenken.

Fig. 15 veranschaulicht in einer schematischen Darstellung ein zweites Ausführungsbeispiel eines erfindungsgemässen Querstromlüfters 1. Bei der folgenden Beschreibung des zweiten Ausführungsbeispiels wird nur auf die Unterschiede zu dem ersten Ausführungsbeispiel und seine Varianten näher eingegangen. Ansonsten gelten die Erläuterungen bezüglich des ersten Ausführungsbeispiels und seiner Varianten in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

Auch bei dem zweiten Ausführungsbeispiel sind sowohl der erste Stator 41 als auch der zweite Stator 42 jeweils als Lager- und Antriebsstator ausgestaltet, wobei der erste Stator 41 mit dem ersten magnetisch wirksamen Kern 31 als elektromagnetischer Drehantrieb zusammenwirkt, welcher nach dem Prinzip des lagerlosen Motors arbeitet, und wobei der zweite Stator 42 mit dem zweiten magnetisch wirksamen Kern 32 als elektromagnetischer Drehantrieb zusammenwirken kann, welcher nach dem Prinzip des lagerlosen Motors arbeitet.

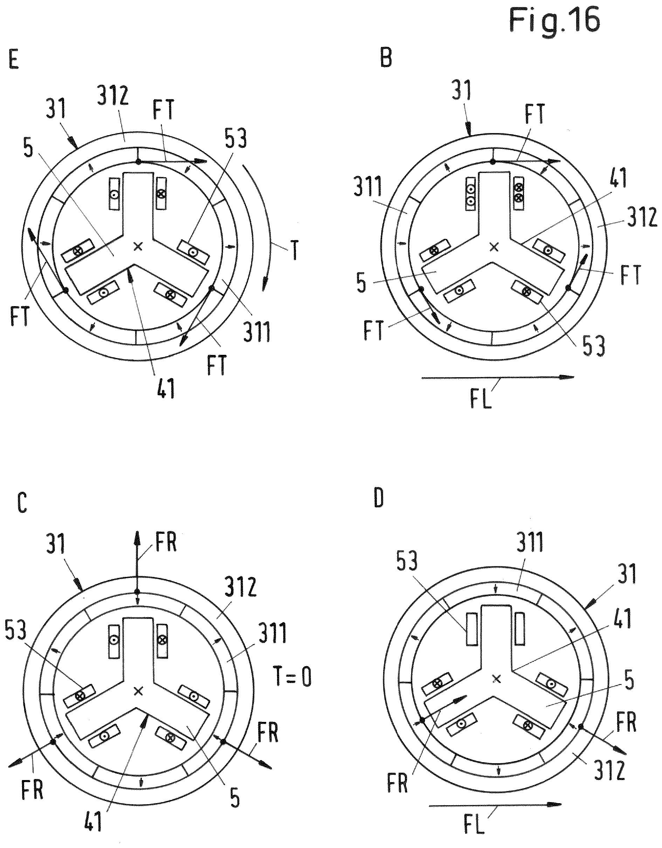

Beide elektromagnetischen Drehantriebe sind mit einer besonders platzsparenden Ausführungsform im jeweiligen Stator 41, 42 ausgestaltet. Jeder Stator 41, 42 umfasst jeweils nur genau drei Spulenkerne 5, wobei auf jedem Spulenkern 5 genau eine konzentrierte Wicklung 53 (Fig. 16) vorgesehen ist, sodass jeder Stator 41, 42 genau drei konzentrierte Wicklungen 53 umfasst. Aus Gründen der besseren Übersicht sind die konzentrierten Wicklungen 53 in Fig. 15 nicht dargestellt. Ferner ist in Fig. 15 das Laufrad 2 nur angedeutet.

Aus Gründen der besseren Übersicht und weil es für das Verständnis ausreichend ist, sind in Fig. 15 die Ummantelungen 313 und die ringförmigen magnetischen Rückschlüsse 312 der beiden magnetisch wirksamen Kerne 31, 32, sowie die beiden Statorgehäuse 91, 92 nicht dargestellt.

Bei dem zweiten Ausführungsbeispiel sind im ersten magnetisch wirksamen Kern 31 und im zweiten magnetisch wirksamen Kern 32 jeweils sechs Permanentmagnete 311 vorgesehen, die sich in ihrer Gesamtheit zu einem Ring ergänzen. In Umfangsrichtung gesehen sind alle sechs Permanentmagnete 311 gleich lang. Jeder Permanentmagnet 311 ist in radialer Richtung magnetisiert, so wie dies die Pfeile ohne Bezugszeichen in den Fig. 15 und Fig. 16 zeigen. Dabei sind in Umfangsrichtung benachbarte Permanentmagnete 311 jeweils in entgegengesetzter Richtung polarisiert, das heisst es grenzen jeweils ein in radialer Richtung nach innen polarisierter Permanentmagnet 311 und ein in radialer Richtung nach aussen polarisierter Permanentmagnet 311 aneinander. Der erste magnetisch wirksame Kern 31 und der zweite magnetisch wirksame Kern 32 sind also jeweils sechspolig, d.h. mit der Polpaarzahl drei ausgestaltet.

Wie dies insbesondere in Fig. 15 zu erkennen ist, sind bei dem zweiten Ausführungsbeispiel die ansonsten gleich ausgestalteten magnetischen Kerne 31 und 32 relativ zueinander um einen von Null verschiedenen Winkel $\alpha$ verdreht an dem Laufrad 2 angeordnet. Dieser Winkel $\alpha$ entspricht der halben Länge eines Permanentmagneten 311 in Umfangsrichtung gemessen, ist also gegeben durch den Quotienten aus 360° und der doppelten Anzahl der Permanentmagnete 311. Bei der vorliegenden Ausgestaltung beträgt der Winkel $\alpha$ also 30°.

Zum besseren Verständnis des Lager- und Antriebsprinzips zeigt Fig. 16 in vier verschieden Abbildungen E, B, C, D den ersten Stator 41 und den ersten magnetisch wirksamen Kern 31 (analoges gilt natürlich für den zweiten Stator 42 und den zweiten magnetisch wirksamen Kern 32). Die vier Abbildungen, die jeweils Momentaufnahmen repräsentieren, unterscheiden sich durch die relative Drehstellung, in welcher sich der erste magnetisch wirksame Kern 31 relativ zu dem ersten Stator 41 befindet. Der Stromfluss durch die jeweilige konzentrierte Wicklung 53 wird durch die Punkt- und Kreuzsymbole in der jeweiligen konzentrierten Wicklung 53 angezeigt. Eine Verdoppelung dieser Symbole in einer der konzentrierten Wicklungen 53 (siehe Abbildung B) symbolisiert einen stärken Strom in dieser konzentrierten Wicklung 53 als in denjenigen mit nur einfach vorhandenen Symbolen. Ein Fehlen der Symbole (siehe Abbildung D) bedeutet, dass in dieser konzentrierten Wicklung 53 momentan kein Strom fliesst.

Zur Drehmomentbildung werden beispielsweise alle drei konzentrierten Wicklungen 53 mit einem gleich grossen Strom im gleichen Wicklungssinn beaufschlagt, wie dies in Abbildung E der Fig. 16 gezeigt ist. Aus den Kräften FT resultiert dann das Drehmoment T, welches die Rotation des ersten magnetisch wirksamen Kerns 31 antreibt. Zur Bildung der Lagerkraft FL müssen die Richtung und die Stärke des Stroms für jede konzentrierte Wicklung 53 so eingestellt werden, dass insgesamt die gewünschte Richtung und die gewünschte Stärke der Lagerkraft resultiert. Dies ist beispielshaft in den Abbildungen B und D der Fig. 16 gezeigt, wo in einem Fall durch eine der drei konzentrierten Wicklungen 53 ein stärkerer Strom fliesst als durch die beiden anderen konzentrierten Wicklungen 53 (Abbildung B), und in dem anderen Fall durch eine der konzentrierten Wicklungen 53 kein Strom fliesst (Abbildung D)

Da die Lagerkraft FL sowohl aus tangentialen FT als auch aus radialen Kräften FR entstehen kann, ist es für jede relative Drehstellung zwischen dem ersten Stator 41 und dem ersten magnetisch wirksamen Kern 31 möglich, eine beliebig starke Lagerkraft FL mit beliebiger Richtung zu generieren.

Es ist aber auch zu erkennen, dass es relative Drehstellungen zwischen dem ersten magnetisch wirksamen Kern 31 und dem ersten Stator 41 gibt, bei denen es nicht möglich ist, ein auf den ersten magnetisch wirksamen Kern 31 wirkendes Drehmoment T zu generieren, wie dies beispielsweise in der Abbildung C der Fig. 16 der Fall ist.

Somit besitzt der erste elektromagnetische Drehantrieb eine vollwertige Lagerfunktionalität bezüglich der berührungslosen magnetischen Lagerung, jedoch gibt es bezüglich des Antriebs Rastpositionen, bei denen die relative Drehstellung des ersten magnetisch wirksamen Kerns 31 zum ersten Stator 41 derart ist, dass mit dem ersten Stator 41 kein auf den ersten magnetisch wirksamen Kern 31 wirkendes Drehmoment T erzeugt werden kann. Aus einer solchen Rastposition wäre dann kein Anfahren des ersten elektromagnetischen Drehantriebs möglich.

Aus diesem Grunde ist der zweite magnetisch wirksame Kern 32 um den von Null verschiedenen Winkel $\alpha$ (hier 30°) verdreht in Bezug auf den ersten magnetisch wirksamen Kern 31 an dem Laufrad 2 angeordnet. Da der erste magnetisch wirksame Kern 31 und der zweite magnetisch wirksame Kern 32 über das Laufrad 2 drehfest miteinander verbunden sind, ist es nicht möglich, dass gleichzeitig der erste magnetisch wirksame Kern 31 und der zweite magnetisch wirksame Kern 32 bezüglich ihres Stators 41 bzw. 42 in einer Drehstellung sind, in welcher kein Drehmoment auf den jeweiligen magnetisch wirksamen Kern 31 bzw. 32 ausgeübt werden kann. Durch die relativ zueinander verdrehte Anordnung des ersten und des zweiten magnetisch wirksamen Kerns 31, 32 befindet sich immer mindestens einer der beiden magnetisch wirksamen Kerne 31, 32 in einer Drehstellung bezüglich des zugehörigen Stators 41, 42, in welcher ein von Null verschiedenes Drehmoment T auf Ihn ausgeübt werden kann, sodass das Laufrad 2 des Querstromlüfters 1 aus jeder beliebigen Drehstellung heraus anlaufen kann. Die beiden Statoren 41 und 42 sind unverdreht relativ zueinander montiert.

Natürlich ist es auch möglich, die beiden magnetisch wirksamen Kerne 31, 32 nicht gegeneinander zu verdrehen, d.h. den Winkel $\alpha$ gleich Null zu wählen, und dafür die beiden Statoren 41, 42 relativ zueinander um den Winkel von 30° verdreht (bezüglich einer Drehung um die axiale Richtung A) anzuordnen.

Neben dem geringen Platzbedarf hat das zweite Ausführungsbeispiel den weiteren Vorteil, dass die Ansteuerung und Regelung der beiden elektromagnetischen Drehantriebe jeweils sehr einfach und mit geringem Aufwand realisierbar sind. Für jeden der beiden elektromagnetischen Drehantriebe sind jeweils nur vier Halbbrücken notwendig. In jedem der beiden Statoren 41, 42 stellt jede der drei konzentrierten Wicklungen 53 jeweils eine Phase dar. Diese drei Phasen werden in einem belastbaren Sternpunkt zusammengeschaltet, sodass in jedem der Statoren 41, 42 der Strom in jeder konzentrierten Wicklung 53 unabhängig von den Strömen in den beiden anderen konzentrierten Wicklungen 53 des gleichen Stators 41 oder 42 eingestellt bzw. geregelt werden kann. Ebenso wird jeweils der Strom, welcher in den Sternpunkt hinein (bzw. aus diesem hinaus) fliesst, geregelt. Somit sind in jedem elektromagnetischen Drehantrieb jeweils vier Ströme zu regeln, wofür vier Halbbrücken benötigt werden. Für jeden elektromagnetischen Drehantrieb werden somit acht Leistungsschalter benötigt.

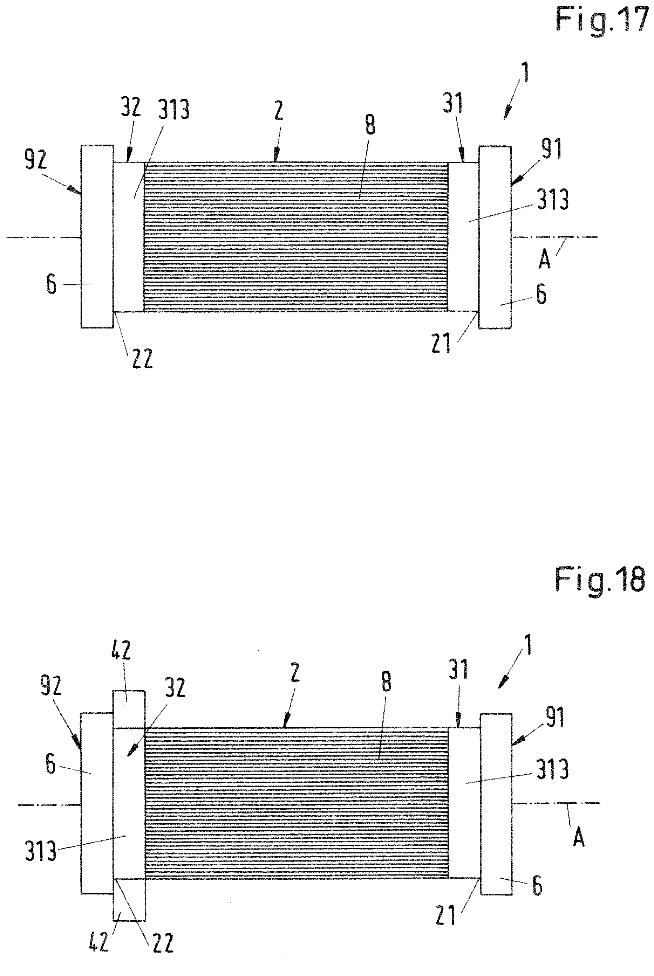

Fig. 17 veranschaulicht in einer sehr schematischen Darstellung ein drittes Ausführungsbeispiel eines erfindungsgemässen Querstromlüfters 1. Fig. 18 veranschaulicht in einer sehr schematischen Darstellung ein viertes Ausführungsbeispiel eines erfindungsgemässen Querstromlüfters 1. Bei der folgenden Beschreibung des dritten und des vierten Ausführungsbeispiels wird nur auf die Unterschiede zu dem ersten und dem zweiten Ausführungsbeispiel und deren Varianten näher eingegangen. Ansonsten gelten die Erläuterungen bezüglich des ersten und des zweiten Ausführungsbeispiels und ihrer Varianten in gleicher Weise oder in sinngemäss gleicher Weise auch für das dritte und das vierte Ausführungsbeispiel. Bei dem dritten und dem vierten Ausführungsbeispiel sind gleiche Teile oder von der Funktion her gleichwertige Teile mit den gleichen Bezugszeichen bezeichnet wie bei den vorangehend beschriebenen Ausführungsbeispielen.

Der wesentliche Unterschied zwischen dem dritten und dem vierten Ausführungsbeispiel einerseits und den ersten beiden Ausführungsbeispielen andererseits liegt daran, dass bei dem dritten und bei dem vierten Ausführungsbeispiel der zweite Stator 42 lediglich als Lagerstator ausgestaltet ist, der somit keine Antriebsfunktion ausüben kann. Der zweite Stator 42 kann also nur eine Lagerkraft ausüben, um den zweiten magnetisch wirksamen Kern 32 magnetisch zu lagern, der zweite Lagerstator 42 kann jedoch kein Drehmoment generieren, das zum Antrieb de Laufrads 2 beiträgt. Bei dem dritten und dem vierten Ausführungsbeispiel kann also nur der erste Stator 41, der mit dem ersten magnetisch wirksamen Kern 31 als erster elektromagnetischer Drehantrieb zusammenwirkt, ein Drehmoment bewirken, welches das Laufrad 2 zur Rotation um die axiale Richtung A antreibt.

Der zweite Stator 42 wirkt mit dem zweiten magnetisch wirksamen Kern 32 lediglich als Magnetlager zusammen, welches das zweite Ende 22 des Laufrads 2 bezüglich des zweiten Stators 42 magnetisch lagert. Der zweite Stator 42 und der zweite magnetisch wirksame Kern 32 können insbesondere wie jedes Magnetlager ausgestaltet sein, das im Stand der Technik bekannt ist und das geeignet ist, den zweiten magnetisch wirksamen Kern zu lagern. Vorzugsweise ist der zweite Stator 32 so ausgestaltet, dass er den zweiten magnetisch wirksamen Kern 32 nur mit stationären, also mit nicht-rotierenden Magnetfeldern magnetisch lagert.

Bei dem in Fig. 17 dargestellten dritten Ausführungsbeispiel ist der zweite Stator 42 radial innenliegend im Laufrad 2 angeordnet. Die Kontrolleinrichtung 6 für den zweiten Stator 42 ist vorzugsweise in einem Teil des zweiten Statorgehäuses 92 angeordnet, der sich ausserhalb des Laufrads 2 befindet.

Bei dem in Fig. 18 dargestellten vierten Ausführungsbeispiel ist der zweite Stator 42 radial aussenliegend um den zweiten magnetisch wirksamen Kern 32 herum angeordnet.

**Patentansprüche**

1. Querstromlüfter zum Erzeugen eines Fluidstroms mit einem zylindrischen Laufrad (2), das sich in einer axialen Richtung (A) von einem ersten Ende (21) bis zu einem zweiten Ende (22) erstreckt, wobei an dem ersten Ende (21) ein ringförmig ausgestalteter erster magnetisch wirksamer Kern (31) vorgesehen ist, und an dem zweiten Ende (22) ein ringförmig ausgestalteter zweiter magnetisch wirksamer Kern (32), wobei eine Mehrzahl von Schaufeln (8) vorgesehen ist, von denen jede bezüglich der axialen Richtung (A) zwischen dem ersten magnetisch wirksamen Kern (31) und dem zweiten magnetisch wirksamen Kern (32) angeordnet ist, wobei ein erster Stator (41) vorgesehen ist, der als Lager- und Antriebsstator ausgestaltet ist, und der mit dem ersten magnetisch wirksamen Kern (31) als erster elektromagnetischer Drehantrieb zusammenwirkt, wobei ein zweiter Stator (42) vorgesehen ist, der zumindest als Lagerstator ausgestaltet ist, mit welchem der zweite magnetisch wirksame Kern (32) berührungslos magnetisch bezüglich des zweiten Stators (42) lagerbar ist, wobei das Laufrad (2) mittels des ersten und des zweiten Stators (41, 42) berührungslos magnetisch antreibbar und berührungslos magnetisch bezüglich des ersten Stators (41) und des zweiten Stators (42) lagerbar ist, **dadurch gekennzeichnet, dass** der erste Stator (41) innerhalb des ersten magnetisch wirksamen Kerns (31) angeordnet ist, sodass der erste magnetisch wirksame Kern (31) den ersten Stator (41) umgibt.

2. Querstromlüfter nach Anspruch 1, bei welchem der zweite Stator (42) als Lager- und Antriebsstator ausgestaltet ist, der mit dem zweiten magnetisch wirksamen Kern(32) als zweiter elektromagnetischer Drehantrieb zusammenwirken kann, um ein Drehmoment auf den zweiten magnetisch wirksamen Kern (32) auszuüben, wobei der zweite Stator (42) innerhalb des zweiten magnetisch wirksamen Kerns (32) angeordnet ist, sodass der zweite magnetisch wirksame Kern (32) den zweiten Stator (42) umgibt.

3. Querstromlüfter nach einem der vorangehenden Ansprüche, bei welchem der erste Stator (41) in einem ersten Statorgehäuse (91) aus einem niederpermeablen Material eingekapselt ist, und bei welchem der zweite Stator (42) in einem zweiten Statorgehäuse (92) aus einem niederpermeablen Material eingekapselt ist.

4. Querstromlüfter nach einem der vorangehenden Ansprüche, wobei in jedem Statorgehäuse (91, 92) eine Kontrolleinrichtung (6) zur Steuerung oder Regelung des jeweiligen Stators (41, 42) vorgesehen ist.

5. Querstromlüfter nach Anspruch 4 wobei jedes Statorgehäuse (91, 92) einen ersten Gehäuseabschnitt (93) und einen zweiten Gehäuseabschnitt (94) aufweist, wobei der erste Gehäuseabschnitt (93) innerhalb des Laufrads (2) angeordnet ist und von einem der magnetisch wirksamen Kerne (31, 32) des Laufrads (2) umgeben ist, und wobei der zweite Gehäuseabschnitt (94) einen Aussendurchmesser aufweist, welcher mindestens so gross ist wie ein Aussendurchmesser des magnetisch wirksamen Kerns (31, 32).

6. Querstromlüfter nach Anspruch 4 und Anspruch 5, wobei jede Kontrolleinrichtung (6) in einem der zweiten Gehäuseabschnitte (94) angeordnet ist.

7. Querstromlüfter nach einem der vorangehenden Ansprüche wobei das Laufrad (2) ohne Welle ausgestaltet ist.

8. Querstromlüfter nach einem der vorangehenden Ansprüche, wobei jeder Stator (41, 42) eine Mehrzahl von Spulenkernen (5) umfasst, von denen sich jeder in radialer Richtung erstreckt, und wobei jeder Spulenkern (5) genau eine konzentrierte Wicklung (53) trägt.

9. Querstromlüfter nach Anspruch 7, wobei für jeden Stator (41) die Anzahl der Spulenkerne (5) genau drei, oder genau vier, oder genau fünf, oder genau sechs beträgt.

10. Querstromlüfter nach einem der vorangehenden Ansprüche, wobei jeder magnetisch wirksame Kern (31, 32) des Laufrads (2) eine Mehrzahl von Permanentmagneten (311) umfasst.

11. Querstromlüfter nach Anspruch 10, wobei jeder Permanentmagnet (311) als Ringsegment ausgestaltet ist, und wobei sich die Permanentmagnete (311) jedes magnetisch wirksamen Kerns (31, 32) zu einem Ring ergänzen.

12. Querstromlüfter nach einem der Ansprüche 10-11, wobei jeder Permanentmagnet (311) in radialer Richtung magnetisiert ist, wobei in Umfangsrichtung benachbart angeordnete Permanentmagnete (311) jeweils entgegengesetzt magnetisiert sind.

**13.** Querstromlüfter nach einem der Ansprüche 10-12, wobei für jeden magnetisch wirksamen Kern (31, 32) die Anzahl der Permanentmagnete (311) genau vier, oder genau acht, oder genau zehn, oder genau zwölf beträgt.

**14.** Querstromlüfter nach einem der Ansprüche 4-13, wobei in jedem Statorgehäuse (91, 92) zwischen dem Stator (41, 42) und der Kontrolleinrichtung (6) eine thermische Schutzschicht (96) vorgesehen ist.

**15.** Querstromlüfter nach einem der vorangehenden Ansprüche, wobei jeder Stator (41, 42) kühlbar ausgestaltet ist.

## Claims

**1.** A cross-flow fan for generating a fluid flow with a cylindrical impeller (2) extending in an axial direction (A) from a first end (21) to a second end (22), wherein an annularly designed first magnetically effective core (31) is provided at the first end (21), and an annularly designed second magnetically effective core (32) is provided at the second end (22), wherein a plurality of vanes (8) is provided, each of which is arranged between the first magnetically effective core (31) and the second magnetically effective core (32) with respect to the axial direction (A), wherein a first stator (41) is provided, which is designed as a bearing and drive stator, and which interacts with the first magnetically effective core (31) as a first electromagnetic rotary drive, wherein a second stator (42) is provided, which is designed at least as a bearing stator, with which the second magnetically effective core (32) can be magnetically levitated without contact with respect to the second stator (42), wherein the impeller (2) can be magnetically driven without contact by means of the first and the second stator (41, 42) and can be magnetically levitated without contact with respect to the first stator (41) and the second stator (42), **characterized in that** the first stator (41) is arranged within the first magnetically effective core (31) such that the first magnetically effective core (31) surrounds the first stator (41).

**2.** A cross-flow fan according to claim 1, wherein the second stator (42) is designed as a bearing and drive stator that can interact with the second magnetically effective core (32) as a second electromagnetic rotary drive to exert a torque on the second magnetically effective core (32), wherein the second stator (42) is arranged within the second magnetically effective core (32) such that the second magnetically effective core (32) surrounds the second stator (42).

**3.** A cross-flow fan according to anyone of the preceding claims, wherein the first stator (41) is encapsulated in a first stator housing (91) of a low-permeable material, and wherein the second stator (42) is encapsulated in a second stator housing (92) of a low-permeable material.

**4.** A cross-flow fan according to anyone of the preceding claims, wherein a control device (6) for controlling or regulating the respective stator (41, 42) is provided in each stator housing (91, 92).

**5.** A cross-flow fan according to claim 4, wherein each stator housing (91, 92) has a first housing portion (93) and a second housing portion (94), wherein the first housing portion (93) is arranged within the impeller (2) and is surrounded by one of the magnetically effective cores (31, 32) of the impeller (2), and wherein the second housing portion (94) has an outer diameter which is at least as large as an outer diameter of the magnetically effective core (31, 32).

**6.** A cross-flow fan according to claim 4 and claim 5, wherein each control device (6) is arranged in one of the second housing portions (94).

**7.** A cross-flow fan according to anyone of the preceding claims, wherein the impeller (2) is designed without a shaft.

**8.** A cross-flow fan according to anyone of the preceding claims, wherein each stator (41, 42) comprises a plurality of coil cores (5) each of which extending in a radial direction, and wherein each coil core (5) carries exactly one concentrated winding (53).

**9.** A cross-flow fan according to claim 7, wherein the number of coil cores (5) for each stator (41) is exactly three, or exactly four, or exactly five, or exactly six.

**10.** A cross-flow fan according to anyone of the preceding claims, wherein each magnetically effective core (31, 32) of the impeller (2) comprises a plurality of permanent magnets (311).

**11.** A cross-flow fan according to claim 10, wherein each permanent magnet (311) is designed as a ring segment, and wherein the permanent magnets (311) of each magnetically effective core (31, 32) complement each other to form a ring.

**12.** A cross-flow fan according to anyone of the claims 10 to 11, wherein each permanent magnet (311) is magnetized in the radial direction, wherein permanent magnets (311) arranged adjacent to each other in the circumferential direction are each oppositely magnetized.

**13.** A cross-flow fan according to anyone of the claims 10 to 12, wherein the number of permanent magnets (311) for each magnetically effective core (31, 32) is exactly four, or exactly eight, or exactly ten, or exactly twelve.

14. A cross-flow fan according to anyone of the claims 4 to 13, wherein a thermal protection layer (96) is provided in each stator housing (91, 92) between the stator (41, 42) and the control device (6).

15. A cross-flow fan according to anyone of the preceding claims, wherein each stator (41, 42) is designed to be coolable.

## Revendications

1. Un ventilateur à flux transversal destiné à générer un flux de fluide, comprenant une roue cylindrique (2) s'étendant dans une direction axiale (A) depuis une première extrémité (21) jusqu'à une deuxième extrémité (22), dans lequel un premier noyau magnétiquement actif (31) de forme annulaire est prévu à la première extrémité (21), et un deuxième noyau magnétiquement actif (32) de forme annulaire est prévu à la deuxième extrémité (22), dans lequel une pluralité d'aubes (8) est prévu dont chacune est disposée entre le premier noyau magnétiquement actif (31) et le deuxième noyau magnétiquement actif (32) par rapport à la direction axiale (A), dans lequel un premier stator (41) est prévu, qui est conçu comme un stator de palier et d'entraînement, et qui coopère avec le premier noyau magnétiquement actif (31) comme premier entraînement rotatif électromagnétique, dans lequel un deuxième stator (42) est prévu, qui est conçu au moins comme un stator de palier, avec lequel le deuxième noyau magnétiquement actif (32) peut être supporté magnétiquement sans contact par rapport au deuxième stator (42), dans lequel la roue (2) peut être entraînée magnétiquement sans contact au moyen du premier et du deuxième stator (41, 42) et peut être supportée magnétiquement sans contact par rapport au premier stator (41) et au deuxième stator (42), **caractérisé en ce que** le premier stator (41) est disposé à l'intérieur du premier noyau magnétiquement actif (31) de sorte que le premier noyau magnétiquement actif (31) entoure le premier stator (41).

2. Le ventilateur à flux transversal selon la revendication 1, dans lequel le deuxième stator (42) est conçu comme un stator de palier et d'entraînement, qui peut coopérer avec le deuxième noyau magnétiquement actif (32) comme deuxième entraînement rotatif électromagnétique pour exercer un couple sur le deuxième noyau magnétiquement actif (32), dans lequel le deuxième stator (42) est disposé à l'intérieur du deuxième noyau magnétiquement actif (32) de sorte que le deuxième noyau magnétiquement actif (32) entoure le deuxième stator (42).

3. Le ventilateur à flux transversal selon l'une quelconque des revendications précédentes, dans lequel le premier stator (41) est encapsulé dans un premier boîtier de stator (91) en un matériau à faible perméabilité, et dans lequel le deuxième stator (42) est encapsulé dans un deuxième boîtier de stator (92) en un matériau à faible perméabilité.

4. Le ventilateur à flux transversal selon l'une quelconque des revendications précédentes, dans lequel un dispositif de contrôle (6) est prévu dans chaque boîtier de stator (91, 92) pour la commande ou la régulation du stator respectif (41, 42).

5. Le ventilateur à flux transversal selon la revendication 4, dans lequel chaque boîtier de stator (91, 92) présente une première section de boîtier (93) et une deuxième section de boîtier (94), dans lequel la première section de boîtier (93) est disposée à l'intérieur de la roue (2) et est entourée par l'un des noyaux magnétiquement actifs (31, 32) de la roue (2), et dans lequel la deuxième section de boîtier (94) présente un diamètre extérieur qui est au moins aussi grand qu'un diamètre extérieur du noyau magnétiquement actif (31, 32).

6. Le ventilateur à flux transversal selon la revendication 4 et la revendication 5, dans lequel chaque dispositif de contrôle (6) est disposé dans l'une des deuxièmes sections de boîtier (94).

7. Le ventilateur à flux transversal selon l'une quelconque des revendications précédentes, dans lequel la roue (2) est conçue sans arbre.

8. Le ventilateur à flux transversal selon l'une quelconque des revendications précédentes, dans lequel chaque stator (41, 42) comprend une pluralité de noyaux de bobine (5), chacun s'étendant dans une direction radiale, chaque noyau de bobine (5) portant exactement un enroulement concentré (53).

9. Le ventilateur à flux transversal selon la revendication 7, dans lequel, pour chaque stator (41), le nombre de noyaux de bobine (5) est exactement trois, ou exactement quatre, ou exactement cinq, ou exactement six.

10. Le ventilateur à flux transversal selon l'une quelconque des revendications précédentes, dans lequel chaque noyau magnétiquement actif (31, 32) de la roue (2) comprend une pluralité d'aimants permanents (311).

11. Le ventilateur à flux transversal selon la revendication 10, dans lequel chaque aimant permanent (311) est conçu comme un segment d'anneau, et dans lequel les aimants permanents (311) de chaque noyau magnétiquement actif (31, 32) se complètent pour former un anneau.

12. Le ventilateur à flux transversal selon l'une quelconque des revendications 10 à 11, dans lequel chaque aimant permanent (311) est magnétisé dans la direction radiale, dans lequel des aimants permanents (311) adjacents dans la direction circonférentielle sont respectivement magnétisés en sens inverse.

13. Le ventilateur à flux transversal selon l'une quelconque des revendications 10 à 12, dans lequel, pour chaque noyau magnétiquement actif (31, 32), le nombre d'aimants permanents (311) est exactement quatre, ou exactement huit, ou exactement dix, ou exactement douze.

14. Le ventilateur à flux transversal selon l'une quelconque des revendications 4 à 13, dans lequel une couche de protection thermique (96) est prévue dans chaque boîtier de stator (91, 92) entre le stator (41, 42) et le dispositif de contrôle (6).

15. Le ventilateur à flux transversal selon l'une quelconque des revendications précédentes, dans lequel chaque stator (41, 42) est configuré pour être refroidi.

Fig.1

Fig.2

EP 4 047 212 B1

Fig.3

Fig.4

Fig.5

Fig.6

Fig.7

Fig.8

Fig.9

41;42

31;32

53

312

×—A

311

5

Fig.10

41;42

311

31;32

312

×—A

311

5

53

Fig.11

41;42

53

31;32

312

×—A

311

311

5

Fig.12

41;42

31;32

311

5

×—A

53

312

311

Fig.13

Fig.14

20

2

1

10

30

8

25

8

8

10

Fig.15

32

α

2

1

42

311

31

5

41

311

5

A

# Fig.16

Fig.17

Fig.18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6404794 B
- JP 2003193994 A
- JP 2001274486 A
- CN 1299035 A
- JP 2000216460 A
- JP S5993994 A
- US 6597719 B1